# EUROPEAN PATENT SPECIFICATION

(11) **EP 3 073 844 B1**
(45) Date of publication and mention of the grant of the patent: **22.01.2020**
(21) Application number: 14805253.3
(22) Date of filing: 27.11.2014
(51) Int. Cl.: A23L 33/17, A23L 33/00

(54) **AGE-TAILORED NUTRITIONAL COMPOSITIONS WITH A VARYING PROTEIN CONTENT**
ALTERSANGEPASSTE ERNÄHRUNGSZUSAMMENSETZUNG MIT VARIIERENDEM PROTEINGEHALT
COMPOSITIONS NUTRITIONNELLES EN FONCTION DE L'ÂGE AVEC UNE TENEUR EN PROTÉINE VARIABLE

(30) Priority: 29.11.2013 EP 13195000
(43) Date of publication of application: 05.10.2016
(73) Proprietor: Société des Produits Nestlé S.A., 1800 Vevey (CH)
(72) Inventor: ERDMANN, Peter, CH-3006 Bern (CH); DESTAILLATS, Frederic, CH-1077 Servion (CH); EGLI, Delphine, CH-1814 La Tour de Peilz (CH); BLANCHER, Florence, CH-1110 Morges (CH); MACE, Catherine, CH-1005 Lausanne (CH); THAKKAR, Sagar, CH-1817 Brent (CH); GIUFFRIDA, Francesca, CH-1083 Mezieres (CH); SHAHKHALILI DULLOO, Yassaman, CH-1814 La Tour de Peilz (CH)
(74) Representative: Rupp, Christian
(86) International application number: PCT/EP2014/075723
(87) International publication number: WO 2015/078938

(56) References cited:
- EP-A1- 1 932 437
- EP-A1- 2 404 507
- EP-A1- 2 452 575
- WO-A1-2009/068549
- WO-A1-2010/003878
- WO-A1-2010/112430
- WO-A1-2010/112430
- WO-A1-2013/109367
- Ekhard E Ziegler: "NEWS RELEASE Role for low-protein formulas is emerging", , 1 November 2012 (2012-11-01), pages 1-3, XP055104962, Retrieved from the Internet: URL:http://www.nestlenutrition-institute.o rg/Events/All_Events/Documents/New_Release _WCPGHAN(1)_Final.pdf [retrieved on 2014-02-28]
- Berthold Koletzko: "The Early Nutrition Programming Project - EU Childhood Obesity Project - Results", 15th European Congress on Obesity, 20 April 2006 (2006-04-20), XP055104960, Retrieved from the Internet: URL:http://www.metabolic-programming.org/o besity/results.htm [retrieved on 2014-02-28]
- B. KOLETZKO ET AL: "Lower protein in infant formula is associated with lower weight up to age 2 y: a randomized clinical trial", AMERICAN JOURNAL OF CLINICAL NUTRITION, vol. 89, no. 6, 22 April 2009 (2009-04-22) , pages 1836-1845, XP055082812, ISSN: 0002-9165, DOI: 10.3945/ajcn.2008.27091
- S Scaglioni ET AL: "Early macronutrient intake and overweight at five years of age", International Journal of Obesity, 1 June 2000 (2000-06-01), pages 777-781, XP055104963, Retrieved from the Internet: URL:http://www.nature.com/ijo/journal/v24/ n6/pdf/0801225a.pdf [retrieved on 2014-02-28]
- I GUNNARSDOTTIR ET AL: "Relationship between growth and feeding in infancy and body mass index at the age of 6 years", INTERNATIONAL JOURNAL OF OBESITY, vol. 27, no. 12, 1 December 2003 (2003-12-01), pages 1523-1527, XP055104965, ISSN: 0307-0565, DOI: 10.1038/sj.ijo.0802438

## Description

### Technical field of the invention

The present invention relates to an age-tailored nutritional composition system for use in infants and young children to reduce the risk of developing obesity later in said infants' or young childs' life or to reduce the IGF-1 level. In particular the system for use according to the present invention comprises at least three nutritional compositions, especially at least two nutritional compositions (e.g. two infant formulas) to be administered during the first year of life of an infant and at least one nutritional composition (e.g. a growing-up milk) to be administered after the first year of life, and wherein the protein content of these nutritional compositions decreases when the age of the infant/young child increases. The whey:casein ratio of these nutritional compositions may also advantageously vary.

### Background of the invention

Mother's milk is recommended for all infants up to the age of 4-6 months. However, in some cases breast feeding is inadequate or unsuccessful or inadvisable for medical reasons or the mother chooses not to breast feed either at all or for a period of more than a few weeks. Infant formulas and growing-up milks have been developed for these situations.
The classification of these different nutritional compositions is based on the age of the infants/children (i.e. on stages).
The infant formulas are given to infants (i.e. children under 1 year of age). The infant formulas on the market today fall into two categories: the starter formulas for infants from birth and up to 4-6 months and which provide complete nutrition for this age group; and the follow-up formulas for infants between the age of 4-6 months and 12 months. The follow-up formulas can be considered as the liquid part of a weaning diet, that is to say that the infants are generally fed with the follow-up formulas in combination with increasing amounts of other foods such as infant cereals and puréed fruits, vegetables and other foodstuffs as the process of weaning progresses.
After 12 months, growing-up milks (or GUMs) can be given to the young children (i.e. children between 1 and 3 years of age) up to two or three years of age. In some cases, they can also be provided to the children even longer (i.e. up to 4, 5, 6, 7 or 8 years of age). They are designed to support a healthy balanced diet. They are generally made from cows' milk that is enriched with key nutrients that the young children need, like vitamins A, C and D, iron, calcium and omega 3.

In accordance with the current regulatory legislations, the infant formulas and growing-up milks have typically a high content of proteins and energy content. The protein content in the known infant formulas is generally from 1.8 to 3.5 g/100 kcal. In the growing-up milks, the level can even be higher, for example between 3 and 5.5 g/100 kcal. This high protein content is present in order to provide sufficient amounts of essential amino acids. However, the high protein content induces higher growth rate than breast fed children, and may induce a higher risk of obtaining obesity later in life and the damage of non-mature organs.

The prevalence of obesity and overweight in adults, children and adolescents has increased rapidly over the past 30 years in the United States and globally, and it continues to rise. Childhood obesity and overweight seem to be more and more common today. Childhood overweight and obesity currently affect 18 million children under the age of 5 worldwide. Almost 30% of US children and adolescents and between 10 and 30% of European children are overweight or obese.

Being overweight or obese can have a serious impact on health. Carrying extra fat increases the risk of developing serious health consequences (or co-morbidities) such as cardiovascular diseases (mainly heart disease and stroke), type 2 diabetes, musculoskeletal disorders like osteoarthritis, and some cancers (endometrial, breast and colon). These conditions may cause premature death and substantial disability. However, it does not only have an impact on obese people, the risk of health problems starts when someone is only very slightly overweight, and the likelihood of problems increases as someone becomes more and more overweight. Many of these conditions cause long-term suffering for individuals and families. In addition, the costs for the health care system can be extremely high.

Different searches have been previously made to develop suitable nutritional compositions for the prevention of obesity later in life.

Many studies were focused on the amount or type of lipid sources to provide to the babies.
For example, WO2010027258 refers to compositions with vegetable lipid and lipid globules having a particular diameter for the prevention, the treatment or the reduction of the risk of obesity.
EP2342977 discloses nutriceutical or pharmaceutical compositions comprising at least docosahexaenoic acid (DHA), or docosapentaenoic acid (DPA) or eicosapentaeonic acid (EPA) and a nucleotide fraction for use in the treatment or prevention of diabetes, obesity and/or insulin resistance.

Some other previous works were focused on the amount or the nature of the protein sources but most of them were limited to providing nutritional compositions to infants (less than 1 year of age), and especially in the first months of age of the infant.

WO2010/003878 refers to age-tailored nutritional system. It gives an example of a system with several subsequent infant formula comprising a decreased than stabilized amount of proteins. However the administration period is limited to one year of age, i.e. to infancy and there is no reference to obesity.

WO2010/112430 is about a composition that is used during or after a period of catch-up growth or weight recovery, following a period of growth restriction or weight lost. The composition does not evolved depending on the age of the individuals.

WO2008/071667 discloses for example a nutritional composition for infants at risk of developing obesity later in life comprising a protein source, a lipid source, and a carbohydrate source and having a protein content of less than 1.8 g/100 kcal and an energy content of less than 650 kcal/l.

EP2452575 discloses a similar set of nutritional compositions for infants and young children, but wherein each nutritional composition has an amount or type of probiotics that is age-specific. A wide list of health benefits is provided, including the reduction of the risk of obesity.

B. Koletzko et al., Am. J. Clin. Nutr. 2009, 89, 1836-1845 describes a randomized clinical trial associating a higher protein content of infant formula with higher weight in the first 2 years of life but having no effect on length.

Very few prior art documents are focused on providing a set of nutritional compositions for the first two to three years of life of a child, each nutritional composition being adapted to the particular needs of these infants and young children (since their needs evolve with the age) and that is able to reduce the risk of developing obesity later in said infants and young children's life. WO2012/004273 discloses a set of nutritional compositions for infants and young children, each nutritional composition having an age-specific fat content. A sequence of two infant formulas followed by a sequence of two growing-up milks is disclosed in the example part. The amount of protein of the infant formulas was between 1.8-2.25 g/100kcal during the first 6 months, then at 1.8 g/100kcal from the 7 to 12 months. The amount of protein of the two growing-up milks was higher: it was of 2 g/100kcal from 1 to 2 years then of 2.25 g/100kcal from 2 to 3 years. However there isn't any particular focus on the prevention of obesity.

There is therefore a need to develop a system of nutritional compositions that will be adapted for infants and young children, which can reduce the risk of developing overweight or obesity later in the infants and young children's life, but that still provide the optimal nutrition required for these said infants and young children depending on their age.

### Summary of the invention

The inventors of the present invention have especially also found that sequentially administering during the first year of life of an infant at least two different nutritional compositions (e.g. infant formulas) having a decreased amount of protein may reduce the risk for the infant to become obese later in life.
They have also found that administering another composition (e.g. growing-up milk) after the first year of life of the young child comprising an even lower amount of protein would be efficient for the same purposes.

Therefore the invention relates to an age-tailored nutritional composition system comprising:
- at least one nutritional composition A that is administered to an infant from birth and until 3-6 months of life of said infant,
- at least one nutritional composition B that is administered to an infant from 3-6 months and until 1 year of life of said infant,
- at least one nutritional composition C that is administered after the first year of life of the young child,
wherein the nutritional compositions A, B and C are sequentially administered to the infant/young child;
wherein said nutritional compositions A and B comprise an amount of protein between 1.5 and 3.0 g/100kcal;
wherein the amount of protein of the nutritional composition(s) B is lower than the amount of protein of the nutritional composition(s) A;
and wherein the amount of protein of the nutritional composition C is at least 1.3 g/100kcal but is lower than the amount of protein of the nutritional compositions A and B,
wherein the amount of protein of the at least one nutritional composition C is comprised between 1.3 and 1.5 g/100kcal,
for use in an infant or young child to reduce the risk of developing obesity later in said infant's or young child's life or to reduce the IGF-1 level.

Advantageously the age-tailored nutritional composition system for use according to the invention comprises:
- at least one nutritional composition A with protein in an amount of 1.75-3.0g/100 kcal,
- at least one nutritional composition B with protein in an amount of 1.5-1.75g/100 kcal,
- at least one nutritional composition C with protein in an amount of 1.3-1.5 g/100kcal.

In some embodiments, the at least one nutritional composition A is administered to an infant between birth and until 3 months of life of said infant then the at least one nutritional composition B is administered to an infant from 3 months and until 1 year of life of said infant.

In some embodiments, the nutritional composition(s) C is/are administered from 1 to 3 years or from 1 to 2 years of life of the young child. In some embodiments it/they can also be provided to the children even longer (i.e. up to 4, 5, 6, 7 or 8 years of age).

In other experiments, the inventors have also found that providing a composition comprising at least 2.4 g of protein per 100kcal (e.g. 2.7 g/100kcal) during at least a part of the neonatal period (e.g. the first 14 days of life) could reduce the accumulation of fat mass.

Therefore in some embodiments of the present invention, the age-tailored nutritional composition system comprises several nutritional compositions A that can be sequentially administered between birth and until 3-6 months, such 2, 3, 4 or even more nutritional compositions A. In some advantageous embodiments, each of these nutritional compositions A has a protein amount that decreases with the sequence of administration (i.e. when the age of the infant increases).

It was also found that the whey:casein ratio of the different nutritional compositions could be advantageously adapted and especially decreased with the sequence of administration (i.e. when the age of the infant/young child increases).

The invention further relates to a nutritional composition comprising an amount of protein between 1.3 and 1.5 g/100kcal for use in a young child after its first year of life to reduce the risk of developing obesity later in said young child's life or to reduce the IGF-1 level.

Further described is an age-tailored nutritional composition system for use in an infant/young child to reduce risk of developing metabolic syndrome, increased weight gain, increased fat deposition, overweight, obesity, insulin resistance, glucose intolerance or diabetes mellitus later in said infant's or young child's life.

Further described is an age-tailored nutritional composition system for use in providing an infant/young child with a balanced nutritional diet for at least the first two years of life.

Further described is an age-tailored nutritional composition system for use to obtain a hormonal profile closer to that of breast fed infants or young children, or to promote a rate of growth in that infant or a young child which approximates to the rate of growth of a breast fed infant or a young child at the same age.

The present invention will now be described in more details.

### Brief description of the figure

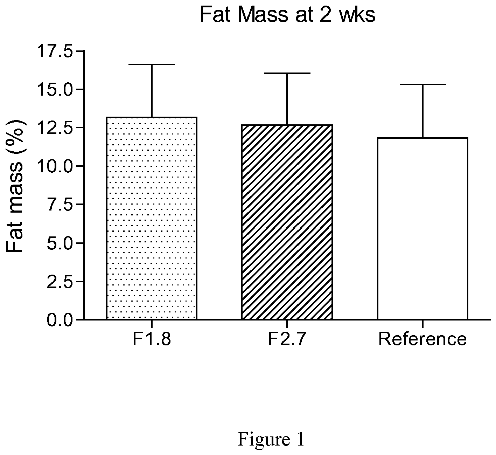

Figure 1 illustrates some results of the experiments detailed in example 7 and it especially shows the fat mass of 2 week-old infants breastfed (Reference) or fed a formula having 1.83g protein/100 kcal (F1.8 group) or 2.7g protein/100kcal (F2.7 group).

### Detailed description of the invention

### Definitions:

Prior to discussing the present invention in further details, the following terms and conventions will first be defined:
Numerical ranges as used herein are intended to include every number and subset of numbers contained within that range, whether specifically disclosed or not. Further, these numerical ranges should be construed as providing support for a claim directed to any number or subset of numbers in that range. For example, a disclosure of from 1 to 10 should be construed as supporting a range of from 1 to 8, from 3 to 7, from 1 to 9, from 3.6 to 4.6, from 3.5 to 9.9, and so forth. All references to singular characteristics or limitations of the present invention shall include the corresponding plural characteristic or limitation, and vice versa, unless otherwise specified or clearly implied to the contrary by the context in which the reference is made.

In the context of the present invention, the term "ratio" by weight (weight/weight) refers to the ratio between the weights of the mentioned compounds. For example, a mixture comprising 60 g whey and 40 g casein would have a weight ratio which is equal to 60:40, which is equal to 3:2 or 1.5 (that is 3 divided with 2). Similarly, a mixture of 50 g whey and 50 g casein would have a ratio by weight of whey and casein of 50:50, which is equal to 1:1 or 1 (that is 1 divided with 1).

The expressions "whey:casein ratio" and "whey to casein ratio" can be used interchangeably.

The term "and/or" used in the context of the "X and/or Y" should be interpreted as "X", or "Y", or "X and Y".

In addition, in the context of the invention, the terms "comprises" or "comprising" do not exclude other possible elements. However they also encompass the embodiments when there is no other element (i.e. "consists of" or "consisting of"). It also encompasses the expressions "consists essentially of" or "consisting essentially of".

The expression "for use" includes also the meaning "suitable for use".

The expression "for use in an infant or a young child" can be replaced by the expression "for use in administration to an infant or a young child".

Unless defined otherwise, all technical and scientific terms used herein have the same meaning as commonly understood by one of ordinary skill in the art.

The term "infant" means a child under the age of 12 months. In the context of the present invention, the infant may be any term infant or preterm infant. In some embodiments of the invention, the infant is a term infant.

The expression "young child" means a child from 1 year to 3 years, also called toddler.

The expressions "nutritional composition system", "system of nutritional compositions" and "set of nutritional compositions" can be used interchangeably.

The expression "nutritional composition" means a composition which nourishes a subject. This nutritional composition is usually to be taken orally or intravenously, and it usually includes a lipid or fat source and a protein source.

In the context of the present invention, the nutritional compositions are typically synthetic nutritional compositions, i.e. not of human origin (e.g. this is not breast milk). The expression "synthetic composition" means a mixture obtained by chemical and/or biological means, which can be chemically identical to the mixture naturally occurring in mammalian milks.

Some examples of nutritional compositions according to the invention are the infant formulas and the growing-up milks. The nutritional compositions can be in powder or liquid form. The system according to the invention can comprise only nutritional compositions that are under a powder form, or only nutritional compositions that are under a liquid form, or a mix thereof.

The expression "infant formula" as used herein refers to a foodstuff intended for particular nutritional use by infants during the first months of life and satisfying by itself the nutritional requirements of this category of person (Article 2(c) of the European Commission Directive 91/321/EEC 2006/141/EC of 22 December 2006 on infant formulae and follow-on formulae). It also refers to a nutritional composition intended for infants and as defined in *Codex Alimentarius* (Codex STAN 72-1981) and Infant Specialities (incl. Food for Special Medical Purpose). The infant formulas can encompass the starter infant formulas and the follow-up or follow-on formulas. Generally a starter formula is for infants from birth as breast-milk substitute, and a follow-up or follow-on formula from the 6^{th} month onwards.

The "growing-up milks" (or GUMs) are given from one year onwards. It is generally a milk-based beverage adapted for the specific nutritional needs of young children.

In some embodiments of the invention, the nutritional composition system comprises at least one hypoallergenic nutritional composition. In some embodiments of the invention, all the nutritional compositions of the system are hypoallergenic nutritional compositions. The expression "hypoallergenic nutritional composition" means a nutritional composition which is unlikely to cause allergic reactions.

In the context of the present invention, different category names (A, B and C) have been given to the nutritional compositions of the system, depending on the time of administration. So in the context of the present invention, a nutritional composition "A" means a nutritional composition that is administered to an infant in a period that occurs between birth and until 3-6 months of life of said infant.
Similarly, a nutritional composition "B" means a nutritional composition that is administered to an infant in a period that occurs from 3-6 months until 1 year of life of said infant.
Similarly, a nutritional composition "C" means a nutritional composition that is administered in a period that occurs after the first year of life of the young child.

The nutritional compositions A, B and C have a different composition. There may be several nutritional compositions of each category name A, B or C in the system according to the invention.

The nutritional compositions A, B and C are sequentially administered to the infant/young child, that is to say that the administration of at least one nutritional composition A is followed by the administration of at least one nutritional composition B, which is followed by the administration of at least one nutritional composition C. By the expressions "sequentially administered" or "administered sequentially", it is meant that the nutritional compositions of the system according to the invention are administered successively, i.e. in stages. There is generally no overlap of administration of the nutritional compositions. In some preferred embodiments, there is no overlap of times of administration of the different nutritional compositions A, B and C. For example, a first nutritional composition is administered to an infant for a certain period of time (e.g. from birth and until 3 months of life of the infant), then a second nutritional composition is administered to the infant either at the end of this certain period of time (e.g. from 3 months and until 1 year of life of the infant) or some days/weeks/months after the end of this certain period of time (e.g. from 6 months and until 1 year of life of the infant).

In addition, each nutritional composition is administered during a specific window of time, for example "from birth and until the first 3 to 15 days of life", "from the first 3 to 15 days and until 1 month/3 months of life", "from birth and until 3-6 months of life", "from 3-6 months and until 1 year of life", "from 1 to 2 or 3 years of life"... In the different specific windows of time, "from" corresponds to the start/beginning of a window of time, and "until" or "to" corresponds to its end. The compositions can be administered during the entire specific window of time, or during only a part thereof. In addition, the compositions can be administered continuously (i.e. at every meal of the infant/young child) or not. Therefore when saying "at least one composition A is administered to an infant from birth and until 3-6 months of life of said infant", it is intended to mean that at least one composition A is administered in a period that occurs or falls between birth and until 3-6 months of life of said infant.
In some advantageous embodiments of the invention, the compositions are administered during their entire specific window of time and/or continuously.

The expressions "from X days/months/year to Y days/months/year of life" or "from X days/months/year up to Y days/months/year of life" have the same meaning that the expression "from X days/months/year and until Y days/months/year of life" and they refer to a specific window of time. The expressions "of life" and "of age" can be used alternatively.

When using the expression "until 3-6 months of life" of an infant, it means that the window of time can end at 3, 4, 5 or 6 months of life of an infant, or any value in between.
When using the expression "from 3-6 months of life" of an infant, it means that the window of time can start at 3, 4, 5 or 6 months of life of an infant, or any value in between.

Similarly, when using the expression "until the first 3 to 15 days" of an infant, it means that the window of time can end at 3, 4, 5, 6, 7, 8, 9, 10, 11, 12, 13, 14 or 15 days.
When using the expression "from the first 3 to 15 days" of an infant, it means that the window of time can start at 3, 4, 5, 6, 7, 8, 9, 10, 11, 12, 13, 14 or 15 days.

When mentioning that a nutritional composition "is administered" to an infant or young child, this means that the nutritional composition is given or provided to the infant or young child by any suitable manner such as by feeding. When it is mentioned in the present invention that a nutritional composition "is administered" to an infant or young child, it has the same meaning that saying a nutritional composition "to be administered" to an infant or young child, "is tailored/adapted for the administration" to an infant or young child, "is tailored/adapted" to an infant or young child, "for" or "is for" an infant or young child. The nutritional compositions of the system of the present invention are "age-tailored" nutritional compositions, i.e. their ingredients are specifically tailored, adapted to the infant or young child of a certain age, e.g. they fit their nutritional requirements at that age.

When an age of the infant/child is mentioned, for example in a specific window of time, whatever it is expressed in days, months or years, this age is intended to be the time already elapsed. For example "3 months of life" means over 3 months, i.e. that the 3 months have just passed. It therefore does not mean the beginning of the 3^{rd} month but rather the end of the 3^{rd} month.

When referring to the amount of protein of the different nutritional compositions that "decreases when the age of the infant/young child increases", this has the same meaning that referring to the amount of protein that "decreases with the sequence of administration". For example, as compositions A, B and C are sequentially administered and their amount of protein decreases when the age of the infant/young child increases, i.e. with the sequence of administration, this means that the amount of protein of composition B will be lower than the amount of protein of composition A, and the amount of protein of composition C will be lower than the amount of protein of composition B (and therefore lower than the amount of protein of composition A).

When the system comprises several nutritional compositions of a same category, for example several nutritional compositions A, for example A1, A2 and A3, these different nutritional compositions A are advantageously also administered sequentially, that is to say that the administration of A1 is followed by the administration of A2, then is followed by the administration of A3. This last one will then be followed by the administration of B, then followed by C. A1, A2 and A3 do not necessarily refer to the same compositions in the different embodiments of the present invention. The number of the different compositions A is only used to refer to the timing of administration, i.e. to indicate the sequence of administration of these compositions within a specific window of time.

The expressions "later in life" or "later in said infant's or young child's life" refer in the context of the present invention to effects measured in the child after the age of 1 year of life, particularly during the childhood or adulthood, such as after the age of 2 years, preferably after the age of 4 years, or after the age of 5 years, or after the age of 7 years of life, or even later, and as a comparison to average observations for subjects of the same age, but not having the same conditions because fed with another nutrition.

The term "normal growth rate of a breast fed infant" means the growth rate for breast fed infants set out in Acta Oaediatrica, Vol 95, April 2006, Supplement 450 "WHO Child Growth Standards".

"Rate of growth" refers to growth in weight, height, head circumference of an infant.

BMI refers to body mass index and is a measure for weight. BMI is defined as the ratio of weight in kilograms divided by height in metres, squared.
In an embodiment of the invention, the nutritional compositions of the system are administrated to infants of non-obese mothers, especially infants of mothers having a BMI below 30, such as below 25, prior to establishment of pregnancy.
In an embodiment of the invention, the nutritional compositions are administrated to infants of obese mothers, especially infants of mothers having a BMI higher than 30 prior to establishment of pregnancy.
The term "obese mother" means a woman with a BMI of at least 30 prior to establishment of pregnancy.

The term "overweight mother" means a woman with a BMI between 25 and below 30 prior to establishment of pregnancy.
The term "normal weight mother" means a woman with a BMI between 18.5 and below 25 prior to establishment of pregnancy.

The term "protein content" means total content of proteinaceous material including free amino acids (if present).

The terms "energy density" and "caloric density" can be used interchangeably.

The term "hormonal profile" refers in the context to the content of hormones present in the blood of an infant or young child, e.g. the amounts of IGF-1 measured in the blood of an infant or young child.

The term "IGF-1" refers to the hormone "insulin-like growth factor-1".

The expressions "non-mature organs", "unmature organs" and "immature organs" can be used interchangeably.

All percentages and ratios are by weight unless otherwise specified.

### Details on the invention:

It is noted that the various aspects, features, examples and embodiments described in the present application may be compatible and/or combined together.

One of the main purposes of the present invention is to provide a set of nutritional compositions for use in infants then young children, that is particularly adapted to said infants and young children's needs and that in the same time provides some advantageous health benefits, especially regarding the reduction of the risk of developing obesity.

While obesity in childhood and adolescence is increasing to the point where it is starting to of serious concern to healthcare professionals, there are many contributory factors to obesity, including nutritional, environmental and inherited factors. It is recognized that the likelihood of developing a nutritional product which is effective in reducing this risk of developing obesity in the infant population at large is remote. However, without being bound by any theory the inventors of the present invention believe that it is possible to provide an age-tailored set of nutritional compositions particularly adapted to the infants/young children's needs (that vary depending on their age) and that allows reducing the risk of future overweight or obesity.

As research into the composition of human milk continues, increasing attention is being paid to the extent to which its composition changes over the period of lactation. These changes are particularly pronounced as regards protein quality and quantity. Dietary protein provides the essential amino acids necessary for protein synthesis and growth. Nutritional compositions to be fed to infants are usually based on cows' milk but the amino acid profile of cows' milk is noticeably different from that of human milk which, in addition, has the lowest protein concentration found in any mammalian milk. In the past, in order to supply enough of the essential amino acids, infant formulas based on cows' milk had to have a protein content significantly higher than that of the human milk. More recently, it has been realised that the total protein quantity can be reduced whilst still meeting the minimum requirements for essential amino acids, e.g. by a judicious selection of protein sources supplemented, if necessary, by small quantities of free amino acids.

However, this line of development does not take account of the physiological properties of particular proteins and the evolution of protein content of human milk over time. Human milk is generally considered to be whey predominant and a range of "whey-adapted" formulas have been developed based on this. However, this fails to take account of the fact that the whey to casein ratio (whey: casein) of human milk varies over time from 80:20 in the first few days of lactation to 50:50 after five to six months after lactation. Furthermore, the protein content of human milk is likewise not constant over time and may vary between 1.8 and 1.3 g/100kcal depending upon the duration of lactation.

As detailed in examples 5 and 6 the inventors of the present invention have especially also found that sequentially administering during the first year of life of an infant at least two different nutritional compositions having a decreased amount of protein may reduce the risk for said infant to become obese later in life. Indeed the inventors of the present invention have surprisingly found that feeding an infant with an infant formula system comprising in a first stage, i.e. from birth up to 3 months, an infant formula having a protein content above 1.75 g/100 kcal (e.g. 1.8 g/100kcal or 2.15 g/100kcal depending on the study) and in a second stage, i.e. from 3 months up to 12 months, an infant formula comprising protein in an amount of less than 1.75 g/100 kcal (e.g. 1.61 or 1.65 g/100kcal depending on the study), but still supplying sufficient quantities of other nutrients which are essential for growth and development, will decrease the IGF-1 level in the infant, and thus provide a hormonal profile closer to that of breast fed infants and reduce the risk of the infant to develop obesity later in life. It will also promote a growth rate of the infant which approximates to the growth rate which is observed in infants fed with human breast milk at the same age. Furthermore, by feeding infants with such a 2-stage infant formula system, the protein burden on non-mature organs of the infant is reduced.

The experiments of example 8 also illustrate the advantages that can be expected to reduce the risk of obesity later in life when feeding young children after 1 year of life with a nutritional composition (e.g. a growing-up milk) comprising a low protein content.
In the existing formulations, the amount of protein administered after the first year of life of a young child is generally high since it is believed that the young children need more proteins at that age to get a suitable growth. As previously mentioned, WO2012/004273 discloses a set of nutritional compositions for infants and young children, with a sequence of two infant formulas followed by a sequence of two growing-up milks. The amount of protein of the infant formulas was between 1.8-2.25 g/100kcal during the first 6 months, then at 1.8 g/100kcal from the 7 to 12 months but the amount of protein of the two growing-up milks was higher: it was 2 g/100kcal from 1 to 2 years then 2.25 g/100kcal from 2 to 3 years.
In addition, current regulatory texts which apply on nutritional compositions for young children (e.g. CODEX STAN 156-1987) incite to use high amounts of protein, especially not less than 3.0 g per 100kcal.
The present inventors believe that administering after the first year of life of a young child a nutritional composition with an amount of protein lower than usual would be efficient to reduce the risk of obesity later in life.

Thus, one aspect of the invention relates to an age-tailored nutritional composition system comprising:
- at least one nutritional composition A that is administered to an infant from birth and until 3-6 months of life of said infant,
- at least one nutritional composition B that is administered to an infant from 3-6 months and until 1 year of life of said infant,
- at least one nutritional composition C that is administered after the first year of life of the young child,
wherein the nutritional compositions A, B and C are sequentially administered to the infant/young child;
wherein said nutritional compositions A and B comprise an amount of protein between 1.5 and 3.0 g/100kcal;
wherein the amount of protein of the nutritional composition(s) B is lower than the amount of protein of the nutritional composition(s) A;
and wherein the amount of protein of the nutritional composition C is at least 1.3 g/100kcal but is lower than the amount of protein of the nutritional compositions A and B,
wherein the amount of protein of the at least one nutritional composition C is comprised between 1.3 and 1.5 g/100kcal,
for use in an infant or young child to reduce the risk of developing obesity later in said infant's or young child's life or to reduce the IGF-1 level.

### Age of administration of the nutritional compositions:

The age-tailored nutritional composition system for use according to the present invention comprises at least three nutritional compositions:
- at least one nutritional composition A,
- at least one nutritional composition B,
- and at least one nutritional composition C.
These different nutritional compositions A, B and C are sequentially administered. As previously mentioned, in some preferred embodiments, there is no overlap of times of administration of the different nutritional compositions A, B and C.
The compositions can also be administered during the entire specific window of time, or during only a part thereof, and the administration can be continuous or not.

The nutritional compositions of the system are age-tailored, that is to say adapted depending on the age of the infant/young child.

The nutritional compositions A and B are sequentially administered to an infant during the first year of life of said infant, and more particularly:
- the nutritional composition(s) A is/are administered to an infant from birth and until 3-6 months of life of said infant
- the nutritional composition(s) B is/are administered to an infant from 3-6 months and until 1 year of life of said infant.

In some advantageous embodiments, the at least one nutritional composition A is administered to an infant between birth and until 3 months of life of said infant then the at least one nutritional composition B is administered to an infant from 3 months and until 1 year of life of said infant.
In some other embodiments, the at least one nutritional composition A is administered to an infant between birth and until 4 months of life of said infant then the at least one nutritional composition B is administered to an infant from 4 months and until 1 year of life of said infant.
In some other embodiments, the at least one nutritional composition A is administered to an infant between birth and until 5 months of life of said infant then the at least one nutritional composition B is administered to an infant from 5 months and until 1 year of life of said infant.
In some other embodiments, the at least one nutritional composition A is administered to an infant between birth and until 6 months of life of said infant then the at least one nutritional composition B is administered to an infant from 6 months and until 1 year of life of said infant.

When the system comprises several nutritional compositions of a same category, for example several nutritional compositions A, for example A1, A2 and A3, these different nutritional compositions A are also advantageously administered sequentially, that is to say that the administration of A1 is followed by the administration of A2, then is followed by the administration of A3.

In one embodiment, the age-tailored nutritional composition system for use according to the invention comprises:
- a nutritional composition A1 that is administered to the infant from birth and until the first 3 to 15 days,
- a nutritional composition A2 that is administered from the first 3 to 15 days and until 3 months of life of the infant.

In another embodiment, the age-tailored nutritional composition system for use according to the invention comprises:
- a nutritional composition A1 that is administered to the infant from birth and until the first 3 to 15 days,
- a nutritional composition A2 is administered from the first 3 to 15 days and until 1 month of life of the infant,
- a nutritional composition A3 is administered from 1 month and until 3 months of life of the infant.

In both embodiments, the first 3 to 15 days can be for example the first 3 to 10 days, or the first 3 to 7 days, or the first 3 to 5 days. Alternatively, it can be for example the first 5 to 15 days, or the first 7 to 14 days, or the first 10 to 14 days.

The nutritional composition(s) C is/are administered after the first year of life of the young child. In some embodiments, the nutritional composition(s) C is/are administered from 1 to 3 years or from 1 to 2 years of life of the young child. In some embodiments, it/they can also be provided to the children even longer (i.e. up to 4, 5, 6, 7 or 8 years of age).

### Nature of the nutritional compositions of the age-tailored system:

As previously mentioned, the age-tailored nutritional composition system for use according to the present invention comprises at least three nutritional compositions:
- at least one nutritional composition A,
- at least one nutritional composition B,
- and at least one nutritional composition C.

The system can comprise several nutritional compositions of a same category (A, B and/or C). In some embodiments, the system comprises several nutritional compositions A, such as two, three, four or even more different nutritional compositions A. The number of the different compositions A (A1, A2, A3...) used in different embodiments of the present invention is used to indicate the sequence of administration of these compositions within a specific window of time.

In some particular embodiments, the age-tailored nutritional composition system for use according to the present invention comprises or consists of:
- one nutritional composition A,
- one nutritional composition B,
- and one nutritional composition C.

In some other particular embodiments, the age-tailored nutritional composition system for use according to the present invention comprises or consists of:
- two nutritional compositions A (A1 and A2),
- one nutritional composition B,
- and one nutritional composition C.

In some other particular embodiments, the age-tailored nutritional composition system for use according to the present invention comprises or consists of:
- three nutritional compositions A (A1, A2 and A3),
- one nutritional composition B,
- and one nutritional composition C.

In some embodiments of the present invention, the nutritional compositions A and B of the system for use according to the invention are infant formulas and the nutritional composition(s) C is/are a growing-up milk.
In a particular embodiment, the nutritional composition(s) A of the system is/are a starter infant formula, the nutritional composition(s) B is/are a follow-up formula and the nutritional composition(s) C is/are a growing-up milk.

The system of nutritional compositions for use according to the present invention may therefore comprise two, three, four or even more different infant formulas. It may also have one or several different growing-up milks, for example one, two or three different growing-up milks. In a particular embodiment, there is a single type of growing-up milk in the set of nutritional compositions of the present invention. In some particular embodiments of the invention, the system therefore comprises or consists of two, three or four infant formulas and one growing-up milk.

### Proteins:

In the context of the present invention, the term "protein" refers to both proteins derived from a source of protein, peptides and to free amino acids in general. Furthermore, the term "protein" refers to one or more proteins.

In the age-tailored nutritional composition system for use according to the present invention, the nutritional compositions A and B comprise an amount of protein between 1.5 and 3.0 g/100kcal, and the nutritional composition(s) C comprise an amount of protein of at least 1.3 and 1.5 g/100kcal.
In addition, the amount of protein of the different nutritional compositions A, B and C decreases when the age of the infant/young child increases, that is to say with the sequence of administration of the different nutritional compositions of the system.

Therefore the amount of protein of the nutritional composition C (or of all of them if there are several nutritional compositions C) is lower than the amount of protein of the nutritional composition B (or of all of them if there are several nutritional compositions B). And the amount of protein of the nutritional composition B (or of all of them if there are several nutritional compositions B) is lower than the amount of protein of the nutritional composition A (or of all of them if there are several nutritional compositions A).

In some advantageous embodiments, the age-tailored nutritional composition system for use according to the present invention comprises:
- at least one nutritional composition A with protein in an amount of 1.75-3.0g/100 kcal,
- at least one nutritional composition B with protein in an amount of 1.5-1.75g/100 kcal.

The at least one nutritional composition A of the system for use according to the present invention may have a protein content in an amount of at least 1.75 g/100 kcal, especially from 1.75 to 3.0g/100 kcal. Depending on the embodiments, the protein content may be from 1.8 to 2.5 g/100kcal, such as from 1.8 to 2.0 g/100 kcal, or from 1.9 to 2.0 g/100 kcal. In some other embodiments, the amount of protein of the at least one nutritional composition A is higher than 2.0 g/100kcal, such as from 2.05 to 2.5 g/100kcal or from 2.4 to 3.0g/100 kcal. In some other embodiments, the amount of protein of the at least one nutritional composition A is from 1.9 to 2.4 g/100 kcal.

As previously mentioned, there may be several nutritional compositions of each category A, B or C in the system for use according to the invention. In some embodiments of the invention, the system comprises several nutritional compositions A, for example a system with at least two nutritional compositions A (A1, A2) or a system with at least three nutritional compositions A (A1, A2, A3), or even more. The amount of protein of these different nutritional compositions A is advantageously from 1.75 to 3.0g/100 kcal and it can be in the different narrower ranges previously described. It is also advantageous that each of these nutritional compositions A have a protein amount that decreases when the age of administration to the infant increases. For example, the amount of protein of A1 would be higher than the amount of protein of A2, which would be higher than the amount of protein of A3 (since A3 is administered after A2, which was administered after A1). In addition, these different nutritional compositions A are advantageously also administered sequentially and before the administration of the nutritional composition(s) B.
In a particular embodiment, the age-tailored nutritional composition system for use according to the present invention comprises:
- one nutritional composition A1 with protein in an amount of 2.4-3.0g/100 kcal (that may be administered to the infant from birth and until the first 3 to 15 days),
- one nutritional composition A2 with protein in an amount of 1.75-2.4g/100 kcal (that may be administered from the first 3 to 15 days and until 3 months of life of the infant).

In another particular embodiment, the age-tailored nutritional composition system for use according to the present invention comprises:
- one nutritional composition A1 with protein in an amount of 2.4-3.0g/100 kcal (that may be administered to the infant from birth and until the first 3 to 15 days),
- one nutritional composition A2 with protein in an amount of 1.9-2.4g/100 kcal (that may be from the first 3 to 15 days and until 1 month of life of the infant),
- one nutritional composition A3 with protein in an amount of 1.75-1.9g/100 kcal (that may be administered from 1 month and until 3 months of life of the infant).

In some particular embodiments of the invention, there is at least one nutritional composition B with a protein content in an amount below 1.75 g/100 kcal, such as below 1.69 g/100 kcal, such as below 1.68 g/100 kcal, or below 1.67 g/100 kcal, or below 1.66 g/100 kcal. In some embodiments of the invention, the at least one nutritional composition B of the system comprises protein in an amount from 1.5 to 1.75 g/100 kcal, such as 1.5 to 1.70 g/100 kcal, or 1.5 to 1.69 g/100 kcal, such as from 1.5 to 1.68 g/100 kcal, such as from 1.5 to 1.67 g/100 kcal, such as from 1.5 to 1.66 g/100 kcal, or from 1.55 to 1.65 g/100 kcal, for example 1.61 or 1.65 g/100 kcal.

According to the invention, the amount of protein of the nutritional composition(s) C is at least 1.3 g/100kcal. The amount of protein is also lower than the amount of protein of all the different nutritional compositions A and B, since as previously mentioned, the compositions A, B and C are administered sequentially and the amount of protein of the different nutritional compositions A, B and C decreases when the age of the infant/young child increases, i.e. it decreases with the sequence of administration of the different nutritional compositions of the system.

According to the invention, the amount of protein of the at least one nutritional composition C of the system according to the invention is comprised between 1.3 and 1.5 g/100kcal.

In some advantageous embodiments, the at least two nutritional compositions A and B of the system for use according to the invention are infant formulas and/or the at least one nutritional composition C is a growing-up milk.

In one embodiment of the invention, the age-tailored nutritional composition system may therefore comprise or consist of:
- a first infant formula with protein in an amount of 1.75-3.0g/100 kcal,
- a second infant formula with protein in an amount of 1.5-1.75g/100 kcal,
- a growing-up milk with protein in an amount comprised between 1.3 and 1.5 g/100kcal.

As previously mentioned, it would therefore be particularly advantageous to provide several nutritional compositions A (for example two nutritional compositions A1 and A2, or three nutritional compositions A1, A2 and A3...).
The inventors of the present invention have indeed also found that providing a composition comprising at least 2.4 g of protein per 100kcal (e.g. 2.7 g/100kcal) during at least a part of the neonatal period (e.g. the first 14 days of life) could reduce the accumulation of fat mass.

Therefore in another embodiment the age-tailored nutritional composition system may comprise or consist of:
- a first infant formula with protein in an amount of 2.4-3.0g/100 kcal,
- a second infant formula with protein in an amount of 1.75-2.4g/100 kcal,
- a third infant formula with protein in an amount of 1.5-1.75g/100 kcal,
- a growing-up milk with protein in an amount comprised between 1.3 and 1.5 g/100kcal.

In another embodiment of the present invention, the age-tailored nutritional composition system for use according to the invention may comprise or consist of:
- a first infant formula with protein in an amount of 2.4-3.0g/100 kcal,
- a second infant formula with protein in an amount of 1.9-2.4g/100 kcal,
- a third infant formula with protein in an amount of 1.75-1.9g/100 kcal,
- a fourth infant formula with protein in an amount of 1.5-1.75g/100 kcal,
- a growing-up milk with protein in an amount comprised between 1.3 and 1.5 g/100kcal.

The detailed make-up of the protein source in the nutritional compositions of the system for use according to the present invention is not believed to be critical to the present invention provided that the minimum requirements or essential amino acid content are met and satisfactory growth is ensured. However, in a preferred embodiment of the invention, the protein sources are based on cow's milk proteins such as whey, casein and mixtures thereof. Furthermore, protein sources based on soy can be used. In an embodiment of the invention, the protein is selected from the group of milk proteins, animal proteins, vegetable proteins, cereal proteins, free amino acids, or combinations thereof. The milk protein preferably includes casein and/or whey protein.
In an embodiment of the invention, the protein source of the nutritional compositions of the system for use according to the invention comprises 0% of casein, or at least 10% of casein, or at least 20% of casein, or at least 30% of casein, or at least 40% of casein, or at least 50% of casein, or at least 60 % of casein, or at least 70 % of casein.

In an embodiment of the invention, the protein source in the nutritional compositions of the system for use according to the invention comprises at least 20% of whey, or at least 30% of whey, or at least 40% of whey, or at least 50% of whey, or at least 60% of whey, or at least 70% of whey, or at least 80% of whey, or at least 90% of whey. In a particular embodiment there is no casein but 100% of whey.

In some embodiments of the invention, the protein of the nutritional compositions in the system is made of mixtures of casein and whey proteins. The whey to casein ratio may be in the range of 20:80 to 100:0, such as from 23:77 to 100:0. Some nutritional compositions may have a whey to casein ratio from 90:10 to 100:0. Some nutritional compositions may have a whey to casein ratio from 70:30 to 90:10. Some nutritional compositions may have a whey to casein ratio from 50:50 to 70:30. Some nutritional compositions may have a whey to casein ratio from 23:70 to 50:50.

The inventors have also found that the whey:casein ratio of the different nutritional compositions could be advantageously adapted and especially decreased when the age of the infant/young child increases (i.e. the ratio decreases with the sequence of administration of the compositions of the system).
Advantageously the whey:casein ratio of the nutritional composition(s) C is lower than the whey:casein ratio of the nutritional composition(s) B, and the whey:casein ratio of the nutritional composition(s) B is lower than the whey:casein ratio of the nutritional composition(s) A.
In some embodiments, the nutritional compositions A and B of the system for use according to the present invention have a whey:casein ratio from 50:50 to 100:0. The whey:casein ratio of the nutritional composition(s) A may be from 70:30 to 100:0, and/or the whey:casein ratio of the nutritional composition(s) B may be from 50:50 to 70:30.
In some embodiments, the whey:casein ratio of the nutritional composition C is from 23:77 to 50:50.

Advantageously, the system for use according to the present invention may comprise several nutritional compositions A, wherein each of them has a different whey:casein ratio that decreases when the age of the infant increases (i.e. with the sequence of administration).

So for example in some embodiments of the system for use according the invention:
- the whey:casein ratio of the nutritional composition A1 is from 90:10 to 100:0,
- the whey:casein ratio of the nutritional composition A2 is from 70:30 to 90:10.

In some other embodiments of the system for use according the invention:
- the whey:casein ratio of the nutritional composition A1 is from 90:10 to 100:0,
- the whey:casein ratio of the nutritional composition A2 is from 70:30 to 90:10,
- the whey:casein ratio of the nutritional composition A3 is 70:30.

Therefore in some embodiments of the invention, the age-tailored nutritional composition system for use according to the invention comprises:
- one nutritional composition A1 with protein in an amount of 2.4-3.0g/100 kcal, with a whey:casein ratio from 90:10 to 100:0 and that is administered to the infant from birth and until the first 3 to 15 days,
- one nutritional composition A2 with protein in an amount of 1.75-2.4g/100 kcal, with a whey:casein ratio from 70:30 to 90:10 and that is administered from the first 3 to 15 days and until 3 months of life of the infant.

In some other embodiments of the invention, the age-tailored nutritional composition system for use according to the invention comprises:
- one nutritional composition A1 with protein in an amount of 2.4-3.0g/100 kcal, with a whey:casein ratio from 90:10 to 100:0 and that is administered to the infant from birth and until the first 3 to 15 days,
- one nutritional composition A2 with protein in an amount of 1.9-2.4g/100 kcal, with a whey:casein ratio from 70:30 to 90:10 and that is administered after the first 3 to 15 days and until 1 month of life of the infant,
- one nutritional composition A3 with protein in an amount of 1.75-1.9g/100 kcal, with a whey:casein ratio of 70:30 and that is administered from 1 month and until 3 months of life of the infant.

The protein(s) in the protein source of the nutritional compositions may be intact or hydrolysed or a combination of intact and hydrolysed proteins.
In an embodiment of the invention, the protein(s) in the protein source is hydrolysed. In another embodiment of the invention, the protein(s) in the protein source is intact.

The term "intact" means in the context of the present invention proteins where the molecular structure of the protein(s) is not altered according to conventional meaning of intact proteins. By the term "intact" is meant that the main part of the proteins are intact, i.e. the molecular structure is not altered, for example at least 80% of the proteins are not altered, such as at least 85% of the proteins are not altered, preferably at least 90% of the proteins are not altered, even more preferably at least 95% of the proteins are not altered, such as at least 98% of the proteins are not altered. In a particular embodiment, 100% of the proteins are not altered.

The term "hydrolysed" means in the context of the present invention a protein which has been hydrolysed or broken down into its component peptides or amino acids.

The proteins may either be fully or partially hydrolysed. In an embodiment of the invention at least 70% of the proteins are hydrolysed, preferably at least 80% of the proteins are hydrolysed, such as at least 85% of the proteins are hydrolysed, even more preferably at least 90% of the proteins are hydrolysed, such as at least 95% of the proteins are hydrolysed, particularly at least 98% of the proteins are hydrolysed. In a particular embodiment, 100% of the proteins are hydrolysed.

Hydrolysis of proteins may be achieved by many means, for example by prolonged boiling in a strong acid or a strong base or by using an enzyme such as the pancreatic protease enzyme to stimulate the naturally occurring hydrolytic process. It may be desirable to add partially hydrolysed proteins (degree of hydrolysation between 2 and 20%), for example for infants believed to be at risk of developing cows' milk allergy.

The protein(s) according to the present invention may also be derived from free amino acids, or a combination of free amino acids and a source of protein, such as whey and casein. In some cases it might be necessary to supplement a source of protein with free amino acids, if it is necessary to meet the minimum requirements for essential amino acid content. These requirements are published for example in EC Directive 91/321/EEC.

As detailed above, the protein source of most or all of the nutritional compositions of the system is a mixture of casein and whey proteins.

The whey protein may be a whey protein isolate, acid whey, sweet whey or sweet whey from which the caseino-glycomacropeptide has been removed (modified sweet whey). Preferably, however, the whey protein is modified sweet whey. Sweet whey is a readily available by-product of cheese making and is frequently used in the manufacture of nutritional compositions based on cows' milk. However, sweet whey includes a component which is undesirably rich in threonine and poor in tryptophan called caseino-glycomacropeptide (cGMP). Removal of the cGMP from sweet whey results in a protein with a threonine content closer to that of human milk. A process for removing cGMP from sweet whey is described in EP880902.

If modified sweet whey is used as the whey protein in a mixture of 60% whey and 40% casein for example, the protein source is preferably supplemented by free tryptophan, isoleucine, histidine and phenylalanine in amounts of up to 0.34% for tryptophan, 0.92% for isoleucine, 0.19% for histidine and 2.2% for phenylalanine (in each case as a percentage by weight of total protein content). If intact sweet whey is used as the whey protein in a mixture of 60% whey and 40% casein, the protein source is preferably supplemented by free tryptophan, leucine, histidine and phenylalanine in amounts of up to 0.5% for tryptophan, 0.73% for leucine, 0.3% for histidine and 2.5% for phenylalanine (in each case as a percentage by weight of total protein content). If intact sweet whey is used as the whey protein in a mixture of 60% whey and 40% casein for example, the protein source is preferably supplemented by free tryptophan, leucine, histidine and phenylalanine in amounts of up to 0.5% for tryptophan, 0.73% for leucine, 0.3% for histidine and 2.5% for phenylalanine (in each case as a percentage by weight of total protein content).

In an embodiment of the present invention the whey protein is sweet whey from which the caseino-glycomacropeptide has been removed and the composition additionally includes free phenylalanine in an amount of up to 2.2%, free isoleucine in an amount of up to 0.92%, free tryptophan in an amount of up to 0.34% and free histidine in an amount of up to 0.19%, in each as a percentage by weight of total protein content. The above described protein of sweet whey has a good amino acid profile that is as close as possible to the amino acid profile of the human breast milk.

In some embodiments of the present invention, for example when the whey:casein ratio is 90:10, the casein may be enriched in b-casein.

### Carbohydrates:

The nutritional compositions used in the present system may contain a carbohydrates source. The preferred source of carbohydrates is lactose although other carbohydrates such as saccharose, maltodextrin, starch and mixtures thereof may also be used.

Advantageously, the carbohydrate content present in the nutritional composition is between 9 and 14 g/100 kcal, such as from 8 to 12 g/100 kcal.

In an embodiment of the invention, the carbohydrate source is lactose.

### Lipids:

The nutritional compositions used in the present system may contain a lipid source. The lipid source may be any lipid or fat which is suitable for use in nutritional compositions to be fed to infants/young children. Preferred fat sources include coconut oil, low erucic rapeseed oil (canola oil), soy lecithin, palm olein and/or sunflower oil. The essential polyunsaturated fatty acids linoleic acid and α-linolenic acid may also be added as small amounts of oils containing high quantities of preformed long chain polyunsaturated fatty acids arachidonic acid and docosahexaenoic acid, e.g. fish oils or single cell oils. In total, the lipid content in the nutritional compositions may be between 3 and 7.5 g/100 kcal, such as from 4.4 to 6 g/100 kcal or from 5 to 7 g/100 kcal.

The source of lipid may have a ratio of linoleic acid (C18:2n-6) to α-linolenic acid (C18:3n-3) between 5:1 and 15:1, preferably between 6:1 and 10:1, such as 6.5 or 8, and a ratio of arachidonic acid (C20:4n-6) to docosahexaenoic acid (C22:6n-3) between 2:1 and 1:1.

### Energy density:

The energy density of the nutritional compositions present in the system for use according to the invention is specified as the number of kilocalories per litre (kcal/l). Furthermore, the energy density refers in the context of powdered products, to the product after reconstitution according to the directions provided with the product.

In an aspect of the invention, the energy density of the nutritional compositions present in the system for use according to the invention may be from 480 to 850 kcal/l such as from 600 to 800 kcal/l. It may be less than 680 kcal/l, such as from 600 to 680 kcal/l, such as from 620 to 680 kcal/l, such as from 620 to 650 kcal/l, particularly 620 kcal/l or particularly 640 kcal/l. The energy density may also be from 650 to 680 kcal/l, particularly 670 kcal/l.

In some embodiments, the energy density of the nutritional compositions of the system increases when the age of the infant/young child increases. For example it may be from 593 to 728 kcal/l within the first 3 months of age, then from 632 to 773 kcal/l from 3 months to 12 months of age, then from 680 to 820 kcal/l after 12 months of age.

### Vitamins and minerals:

The nutritional compositions may also contain all vitamins and minerals understood to be essential in the daily diet in nutritionally significant amounts. Minimum requirements have been established for certain vitamins and minerals. Examples of minerals, vitamins and other nutrients optionally present in the nutritional compositions include vitamin A, vitamin B1, vitamin B2, vitamin B6, vitamin E, vitamin K, vitamin C, vitamin D, folic acid, inositol, niacin, biotin, pantothenic acid, choline, calcium, phosphor, iodine, iron, magnesium, copper, zinc, manganese, chloride, potassium, sodium, selenium, chromium, molybdenum, taurine, and L-carnitine. The minerals are usually added in salt form.

### Emulsifiers:

If necessary, the nutritional compositions may contain emulsifiers and stabilisers such as lecithin, e.g. soy lecithin, monoglycerides, diglycerides or citric esters of mono-and di-glycerides, and the like. This is especially the case if the nutritional compositions are provided in liquid form and particularly if the content of lipids is high.

### Compounds with beneficial effect:

The nutritional compositions of the system for use according to the present invention may optionally comprise other compounds which may have a beneficial effect such as probiotics (like probiotic bacteria), fibres, lactoferrin, nucleotides, nucleosides, and the like in the amounts customarily found in nutritional compositions to be fed to infants. In an embodiment the nutritional compositions comprises one or more probiotic bacteria.

Probiotic bacteria are bacteria which have a beneficial effect on the intestinal system of humans and other animals.

Strains of Lactobacillus are the most common microbes employed as probiotics. However, other probiotic strains than Lactobabillus may be used in the present nutritional composition, for example Bifidobacterium and certain yeasts and bacilli. The probiotic microorganisms most commonly used are principally bacteria and yeasts of the following genera: Lactobacillus spp., Streptococcus spp., Enterococcus spp., Bifidobacterium spp. and Saccharomyces spp.
In some particular embodiments, the probiotic is a probiotic bacterial strain. Probiotic bacteria are bacteria which have a beneficial effect on the intestinal system of humans and other animals.
In some specific embodiments, it is particularly Bifidobacteria and/or Lactobacilli.

### Examples of probiotic strains include Lactobacillus rhamnosus, Lactobacillus paracasei, Bifidobacterium lactis, Bifidobacterium longum.

In an embodiment of the invention, the nutritional composition further includes a probiotic strain such as a probiotic bacterial strain in an amount of from 10⁶ to 10¹¹ cfu/g of composition (dry weight).

A probiotic is a microbial cell preparation or components of microbial cells with a beneficial effect on the health or well-being of the host. Suitable probiotic bacterial strains include *Lactobacillus rhamnosus* ATCC 53103 obtainable from Valio Oy of Finland under the trademark LGG, *Lactobacillus rhamnosus* CGMCC 1.3724, *Lactobacillus paracasei* CNCM I-2116, *Bifidobacterium lactis* CNCM 1.3446 sold by inter alia by the Christian Hansen company of Denmark under the trademark Bb12 and *Bifidobacterium longum* ATCC BAA-999 sold by Morigana Milk Industry Co. Ltd. of japan under the trademark BB536. The amount of probiotic, if present, likewise preferably varies as a function of the age of the infant.

Since probiotic bacteria have a beneficial effect the intestinal flora in a human being, also an infant, it is believed by the inventors of the present invention, without being bound by any theory, that probiotic bacteria in a nutritional composition in combination with proteins provide a synergistic effect to reduce the risk of an infant fed with said nutritional composition to develop obesity later in life. Probiotics enable a better utilization of nutrients while producing by-products that may have a physiological effect on digestion. The use of specific probiotics can therefore improve the uptake and beneficial effect of a diet having a certain amount of proteins.

The nutritional compositions may also contain at least one prebiotic in an amount of 0.3 to 10%. A prebiotic is a non-digestible food ingredient than beneficially affects the host by selectively stimulating the growth and/or activity of one or a limited number of bacteria in the colon, and thus improves host health. Such ingredients are non-digestible in the sense that they are not broken down and absorbed in the stomach or small intestine and thus pass intact to the colon where they are selectively fermented by the beneficial bacteria. Examples of prebiotics include certain oligosaccharides, such as fructooligosaccharides (FOS) and galactooligosaccharides (GOS). The prebiotics can also be a BMO (bovine's milk oligosaccharide) and/or a HMO (human milk oligosaccharide) such as N-acetylated oligosaccharides, sialylated oligosaccharides, fucosylated oligosaccharides and any mixtures thereof. A combination of prebiotics may be used such as 90% GOS with 10% short chain fructo-oligosaccharides such as the product sold under the trademark Raftilose® or 10% inulin such as the product sold under the trademark Raftiline®.

A particularly preferred prebiotic is a mixture of galacto-oligosaccharide(s), N-acetylated oligosaccharide(s) and sialylated oligosaccharide(s) in which the N-acetylated oligosaccharide(s) comprise (represent) 0.5 to 4.0% of the oligosaccharide mixture, the galacto-oligosaccharide(s) comprise (represent) 92.0 to 98.5% of the oligosaccharide mixture and the sialylated oligosaccharide(s) comprise (represent) 1.0 to 4.0% of the oligosaccharide mixture. This mixture is hereinafter referred to as "CMOS-GOS". Preferably, a composition for use according to the invention contains from 2.5 to 15.0 wt% CMOS-GOS on a dry matter basis with the proviso that the composition comprises at least 0.02 wt% of an N-acetylated oligosaccharide, at least 2.0 wt% of a galacto-oligosaccharide and at least 0.04 wt% of a sialylated oligosaccharide.
WO2006087391 and WO2012160080 provide some examples of production of CMOS-GOS.

### Kit:

The nutritional compositions of the system for use according to the invention may be advantageously present in the form of a kit or a kit-of-part, i.e. packaged in separated units. Typically each unit contains sufficient amount of the different nutritional compositions, e.g. in concentrated form to prepare a single serving upon reconstitution with an appropriate amount of water (when the nutritional composition is in the powder form).
The separated units (e.g. single dose units) may be in the form of capsules. For instance, suitable capsules are described in WO2010/128051, WO2010/128031, WO2010/128028 and WO2014/082924. The capsules may be disposable capsules equipped with opening means contained within the capsule to permit draining of the reconstituted formula directly from the capsule into a receiving vessel. The receiving vessel can be for example a feeding bottle for the infant. A method of using capsules for dispensing an infant nutritional composition is described in WO2006/077259.
In a particular embodiment, the capsules may be specifically designed for insertion into a beverage production machine such as an infant formula production machine. Suitable capsules and machines are for example described in WO2012/034819, WO2012/062842, WO2012/104173 and WO2012/146470.
The single dose units may also be in the form of stick packs (blister packs) or sachets.

The individual nutritional compositions being part of the infant nutrition kit of the invention may be packed into individual capsules and presented to the consumer in multipacks containing a sufficient number of capsules to meet the requirements of an infant over a period of time, e.g. one week or one month.

### Uses of the nutritional compositions:

The age-tailored nutritional composition system according to the present invention is for use in an infant or a young child to reduce the risk of developing obesity later in said infant's or young child's life.

As previously mentioned, the nutritional compositions A, B and C are sequentially administered to the infant/young child. The at least one nutritional composition A is administered to an infant from birth and until 3-6 months of life of said infant, the at least one nutritional composition B is administered to an infant from 3-6 months and until 1 year of life of said infant, and the at least one nutritional composition C is administered after the first year of life of the young child.

Further described is that the age-tailored nutritional composition system can also be for use in providing an infant or young child with a balanced nutritional diet for at least the first two years of life.

Further described is that it can also be for use in an infant or a young child, to obtain a hormonal profile closer to that of breast fed infants or young children.
By the term "obtain a hormonal profile" it is meant to "obtain a content of hormones". The hormones refer especially to IGF-1.

IGF-1 level can be measured in blood samples taken from infants/young children by any conventional method, for example a chemilumiscence kit (Nichols Advantage, S. Juan Capistrano, Calif., USA).
The connection between IGF-1 and body weight is well known in the art, see for example Savino et al., "Relationships between IGF-1 and Weight Z score, BMI, Tripital Skin-Fold Thickness, Type of feeding in Healthy Infants in the First 5 months of life", Ann Nutr Metab 2005, 49, 83-87, where it is disclosed that formula fed infants have a significant higher IGF-1 level and higher body weight than breast fed infants. The document furthermore discloses the relationship between IGF-1 levels and body weight. The inventors of the present invention believe, without being bound by any theory, that infants/young children having a lower IFG-1 level will have a reduced risk of obtaining obesity later in life. However, a proposed mechanism of obesity in formula fed infants or young children compared to breast fed infants or young children is that a high protein intake would promote the secretion of IGF-1, a tropical hormone involved in longitudinal growth as well as muscle and fat mass development. Thus, by feeding infants with nutritional compositions having a high amount of protein but only during a short period of time, then by feeding infants/young children with nutritional compositions having lower amounts of protein, the IGF-1 level in the infant/young child will be decreased and the risk of obtaining obesity later in life will be reduced.

Furthermore, it is described that a reduced level of IGF-1 in infants/young children fed with a nutritional composition system will induce a hormonal profile in the infant or young child closer to the one of a breast fed infant.

By the term "closer to" in the expression "closer to that of breast fed infants or young children" it is meant that the hormonal profile is closer to that of breast fed infants or young children as compared to the hormonal profile of infants or young children fed with an age-tailored nutritional composition system of the present invention. By the term "closer to" it is not meant that the hormonal profile of infants or young children fed with the age-tailored nutritional composition system of the present invention equals the hormonal profile of breast fed infants or young children, it is simply meant that the hormonal profile is closer to that of breast fed infants or young children than the hormonal profile of infants or young children fed with a standard nutritional composition (e.g. a standard infant formula) is to breast fed infants or young children.

Further described is that the age-tailored nutritional composition system can also be for use in an infant or a young child to promote a rate of growth in that infant or a young child which approximates to the rate of growth of a breast fed infant or a young child at the same age.

The term "approximates" refers to a rate of growth which is closer to the one of breast fed infants or young children as compared to the growth rate of an infant or a young child fed with a standard nutritional composition. The term "approximates" does not mean that the growth rate has to be equal to that of breast fed infants or young children, it just have to be closer to that of breast fed infants or young children, than the growth rate of infants or young children fed with a standard nutritional composition (e.g. a standard infant formula) is to breast fed infants or young children.

Another object of the present invention is a nutritional composition comprising an amount of protein between 1.3 and 1.5 g/100kcal for use in a young child after its first year of life to reduce risk of developing obesity later in said young child's life and to reduce the IGF-1 level.

Further described is a nutritional composition comprising an amount of protein between 1.3 and 1.5 g/100kcal for use in a young child after its first year of life to provide a balanced nutritional diet to said young child.

In some embodiments this nutritional composition is a growing-up milk.

Further described is the use of an age-tailored nutritional composition system (or the use of nutritional compositions to prepare the system), to be administered to an infant or a young child to reduce the risk of developing metabolic syndrome, increased weight gain, increased fat deposition, overweight, obesity, insulin resistance, glucose intolerance or diabetes mellitus later in said infant's or young child's life.

Further described is the use of an age-tailored nutritional composition system, to be administered to an infant or a young child to provide said infant or young child with a balanced nutritional diet for at least the first two years of life.
Further described is the use of an age-tailored nutritional composition system (or the use of nutritional compositions to prepare the system), to be administered to an infant or a young child to obtain a hormonal profile closer to that of breast fed infants or young children.
Further described is the use of an age-tailored nutritional composition system (or the use of nutritional compositions to prepare the system), to be administered to an infant or a young child to promote a rate of growth in that infant or a young child which approximates to the rate of growth of a breast fed infant or a young child at the same age.

Further described is the use of a nutritional composition comprising an amount of protein between 1.3 and 1.5 g/100kcal to be administered after the first year of life of a young child to reduce the risk of developing metabolic syndrome, increased weight gain, increased fat deposition, overweight, obesity, insulin resistance, glucose intolerance or diabetes mellitus later in said young child's life.
Further described is the use of a nutritional composition comprising an amount of protein between 1.3 and 1.5 g/100kcal to be administered after the first year of life of a young child to provide a balanced nutritional diet to said young child.

Further described is a method for reducing the risk of developing metabolic syndrome, increased weight gain, increased fat deposition, overweight, obesity, insulin resistance, glucose intolerance or diabetes mellitus later in an infant's or young child's life, said method comprising administering to said infant or young child an age-tailored nutritional composition system.
Further described is a method for providing an infant or young child with a balanced nutritional diet for at least the first two years of life, said method comprising administering to said infant or young child an age-tailored nutritional composition system.

Further described is a method for obtaining a hormonal profile closer to that of breast fed infants or young children, said method comprising administering to an infant or young child an age-tailored nutritional composition system.

Further described is a method for promoting a rate of growth in an infant or a young child which approximates to the rate of growth of a breast fed infant or a young child at the same age, said method comprising administering to said infant or young child an age-tailored nutritional composition system.

Further described is a method for reducing the risk of developing metabolic syndrome, increased weight gain, increased fat deposition, overweight, obesity, insulin resistance, glucose intolerance or diabetes mellitus later in a young child's life, said method comprising administering to said young child after its first year of life a nutritional composition comprising an amount of protein between 1.3 and 1.5 g/100kcal.

Further described is a method for providing a balanced nutritional diet to a young child, said method comprising administering to said young child after its first year of life a nutritional composition comprising an amount of protein between 1.3 and 1.5 g/100kcal.

### Production:

The nutritional compositions of the age-tailored nutritional composition system according to the invention can be produced according to any method known by the skilled man. For example, the nutritional composition (e.g. an infant formula) may be prepared by blending together the protein source, the carbohydrate source and the fat source in appropriate proportions. If used, the emulsifiers may be included at this point. The vitamins and minerals may be added at this point but they are usually added later to avoid thermal degradation. Any lipophilic vitamins, emulsifiers and the like may be dissolved into the fat source prior to blending. Water, preferably water which has been subjected to reverse osmosis, may then be mixed in to form a liquid mixture. The temperature of the water is conveniently in the range between about 50°C and about 80°C to aid dispersal of the ingredients. Commercially available liquefiers may be used to form the liquid mixture.

The liquid mixture may then be thermally treated to reduce bacterial loads. For example the liquid mixture may be rapidly heated to a temperature in the range between about 80°C and about 150°C (such as from 80°C to 110°C) for about 5 seconds to about 5 minutes. This may be carried out by means of steam injection, an autoclave or a heat exchanger, for example a plate heat exchanger.
Then, the liquid mixture may be cooled to between about 60°C and about 85°C for example by flash cooling. The liquid mixture may then be homogenised; for example in two stages at about 7 MPa to about 40 MPa in the first stage and about 2 MPa to about 14 MPa in the second stage. The homogenised mixture may then be further cooled and any heat sensitive components; such as vitamins and minerals may be added. The pH and solids content of the homogenised mixture are conveniently adjusted at this point.
If the final product is to be a powder, the homogenised mixture is transferred to a suitable drying apparatus such as a spray dryer or freeze dryer and converted to powder. The powder should have a moisture content of less than about 5% by weight.
If it is desired to produce a liquid composition, the homogenised mixture is filled into suitable containers; preferably aseptically. However, the liquid composition may also be retorted in the container. Suitable apparatus for carrying out filling of this nature is commercially available. The liquid composition may be in the form of a ready to feed composition having a solids content of about 10 to about 14% by weight or may be in the form of a concentrate; usually of solids content of about 20 to about 26% by weight.

### Regimen:

Further described is a nutrition regimen comprising:
- feeding an infant from birth and until 3-6 months of life at least one nutritional composition A,
- feeding said infant from 3-6 months and until 1 year of life at least one nutritional composition B;
- feeding said infant, now being a young child, after the first year of life one nutritional composition C;
wherein said nutritional compositions A and B comprise an amount of protein between 1.5 and 3.0 g/100kcal;
wherein the amount of protein of the nutritional composition(s) B is lower than the amount of protein of the nutritional composition(s) A;
and wherein the amount of protein of the nutritional composition C is at least 1.3 g/100kcal but is lower than the amount of protein of the nutritional compositions A and B.
The different embodiments (e.g. protein amounts of the different nutritional compositions; whey:casein of the different nutritional compositions ; administration time...) described in the present application in relation to the other subject-matters also apply to the regimen part.

The invention will now be described in further details in the following non-limiting examples.

### Examples

### Example 1

An age tailored set of nutritional compositions according to the invention is shown below.

**Table 1:**

| Nutritional composition of the age-tailored system | 1^{st} one | 2^{nd} one | 3^{rd} one |
|---|---|---|---|
| Category name of the nutritional composition | A | B | C |
| Age range of administration to the infant/young child | First 3 months | From 4th to 12th month | After 12 months |
| Energy density Kcal/L | 593-728, for example 630-670 | 630-773, for example 630 | 480-850, for example 680-820 or for example 630 |
| Protein content g/100Kcal | 1.75-3.0 | 1.50-1.75 | 1.30-1.50 |
| Fat content g/100Kcal | 5.65-6.91 | 5.67-6.93 | 3.3-7.25, for example 5.87-7.25 |
| Carbohydrate content g/100Kcal | 9.73-11.67 | 9.55-11.45 | 9.2-13.5, for example 11.2-13.5 |
| Whey:casein ratio | 100:0-70:30 | 70:30-50:50 | 50:50-23:77 |

### Example 2

Another example of age tailored set of nutritional compositions according to the invention is shown below.

**Table 2:**

| Nutritional composition of the age-tailored system | 1^{st} one | 2^{nd} one | 3^{rd} one | 4^{th} one |
|---|---|---|---|---|
| Category name of the nutritional composition | A1 | A2 | B | C |
| Age range of administration to the infant/young child | First 3 to 15 days | From the first 3 to 15 days up to the 3rd month | 4th to 12th month | After 12 months |
| Energy density Kcal/L | 593-728, for example 670 | 593-728, for example 650 | 630-773, for example 630 | 480-850, for example 680-820 or for example 630 |
| Protein content g/100Kcal | 2.40-3.0 | 1.75-2.40 | 1.50-1.75 | 1.30-1.50 |
| Fat content g/100Kcal | 5.65-6.91 | 5.65-6.91 | 5.67-6.93 | 3.3-7.25, for example 5.87-7.25 |
| Carbohydrate content g/100Kcal | 9.73-11.67 for example 10.1 | 9.73-11.67 for example 11.5 | 9.55-11.45 | 9.2-13.5, for example 11.2-13.5 |
| Whey:Casein ratio | 100:0-90:10 | 90:10-70:30 | 70:30-50:50 | 50:50-23:77 |

### Example 3

### Example 3a):

Another example of age tailored set of nutritional compositions according to the invention is shown below.

**Table 3:**

| Nutritional composition of the age-tailored system | 1^{st} one | 2^{nd} one | 3^{rd} one | 4^{th} one | 5^{th} one |
|---|---|---|---|---|---|
| Category name of the nutritional composition | A1 | A2 | A3 | B | C |
| Age range of administration to the infant/young child | First 3 to 15 days | From the first 3 to 15 days up to 1st month | 2nd and 3rd months | 4th to 12th month | After 12 months |
| Energy density Kcal/L | 593-728, for example 670 | 593-728, for example 650 | 593-728, for example 630 | 630-773, for example 630 | 480-850, for example 680-820 or for example 630 |
| Protein content g/100Kcal | 2.40-3.0 | 1.90-2.40 | 1.75-1.90 | 1.50-1.75 | 1.30-1.50 |
| Fat content g/100Kcal | 5.65-6.91 | 5.65-6.91 | 5.65-6.91 | 5.67-6.93 | 3.3-7.25, for example 5.87-7.25 |
| Carbohydrate content g/100Kcal | 9.73-11.67 for example 10.1 | 9.73-11.67 for example 11.4 | 9.73-11.67 for example 11.6 | 9.55-11.45 | 9.2-13.5, for example 11.2-13.5 |
| Whey:Casein ratio | 100:0-90:10 | 90:10 - 70:30 | 70:30 | 70:30-50:50 | 50:50-23:77 |

### Example 3b):

Another example of age tailored set of nutritional compositions according to the invention corresponds to the example of example 3a wherein the fifth nutritional composition of the age-tailored system (i.e. composition C) has an energy density of 480 kcal/L, a protein amount of 1.5g/100kcal and a fat amount of 3.3 g/100kcal.

### Example 4

A detailed composition of one nutritional composition B of the age tailored nutritional composition system according to the invention is given in the following table.

**Table 4:**

| Nutrient | per 100kcal | per litre |
|---|---|---|
| Energy (kcal) | 100 | 630 |
| Protein (g) | 1.50 | 9.45 |
| (skimmed milk powder, modified sweet whey) | | |
| free phenylalanine (mg) | 30 | 189 |
| free isoleucine (mg) | 13.5 | 85 |
| free tryptophan (mg) | 4.9 | 30.9 |
| free histidine (mg) | 2.5 | 15.8 |
| whey:casein ratio | 60:40 | 60:40 |
| Fat (g) | 5.3 | 33.4 |
| Linoleic acid (g) | 0.7 | 4.4 |
| α-Linolenic acid (mg) | 106 | 668 |
| DHA (mg) | 11.5 | 72.5 |
| ARA (mg) | 11.5 | 72.5 |
| | | |
| Linoleic acid:α-Linolenic acid | 6.5 | 6.5 |
| Lactose (g) | 11.6 | 73.1 |

| Minerals and Electrolytes | | |
|---|---|---|
| Na (mg) | 25 | 158 |
| K (mg) | 89 | 561 |
| Cl (mg) | 64 | 403 |
| Ca (mg) | 64 | 403 |
| P (mg) | 32 | 202 |
| Ca/P | 2.0 | 2.0 |
| Mg (mg) | 6.9 | 43.5 |
| Mn (µg) | 8.0 | 50.4 |

| Vitamins and Trace Elements | | |
|---|---|---|
| Vitamin A (IU) | 350 | 2205 |
| Vitamin D (IU) | 60 | 378 |
| Vitamin E (IU) | 1.2 | 7.6 |
| Vitamin K1 (µg) | 8.0 | 50.4 |
| Vitamin C (mg) | 10 | 63 |
| Vitamin B1 (mg) | 0.07 | 0.44 |
| Vitamin B2 (mg) | 0.15 | 0.95 |
| Niacin (mg) | 1.0 | 6.3 |
| Vitamin B6 (mg) | 0.075 | 0.47 |
| Folic acid (µg) | 12 | 75.6 |
| Pantothenic acid (mg) | 0.45 | 2.83 |
| Vitamin B12 (µg) | 0.3 | 1.89 |
| Biotin (µg) | 2.2 | 13.9 |
| Choline (mg) | 10 | 63 |
| Inositol (mg) | 5.0 | 31.5 |
| Taurine (mg) | 7.0 | 44.1 |
| Carnitine (mg) | 1.6 | 10.1 |
| Fe (mg) | 1.2 | 7.56 |
| I (µg) | 15 | 94.5 |
| Cu (mg) | 0.07 | 0.44 |
| Se (µg) | 2.0 | 12.6 |
| Zn (mg) | 0.75 | 4.72 |
| Nucleotides | | |
| CMP (mg) | 2.3 | 14.5 |
| UMP (mg) | 1.5 | 9.5 |
| AMP (mg) | 0.7 | 4.4 |
| GMP (mg) | 0.3 | 1.9 |

| Probiotics | | |
|---|---|---|
| *B. lactis* CNCM I-3446 | 2 x 10⁷ cfu/g powder | |
| *L. rhamnosus* CGMCC 1.3724 | 2 x 10⁷ cfu/g powder | |

### Example 5

Example 5 describes a study conducted to infants being fed with:
1) either an infant formula system comprising a first infant formula having an amount of protein of 2.15 g/100 kcal (composition A) and a second infant formula having an amount of protein of 1.61 g/100 kcal (composition B). These infants were the test group.
2) or solely the first infant formula having an amount of protein of 2.15 g/100 kcal. These infants were the control group.
The tested infant formula system represents an example of a part of the age tailored nutritional composition system according to the present invention, especially an example of the part provided to the infants before the first year of age.

The primary objective of the study was to evaluate the growth of infants from 2 groups (test group and control group) and measure the IGF-1 level in the infants at the age of 6 months and 12 months after birth of the infant.

Both the first infant formula and the second infant formula were prepared as a ready-to-feed liquid (they were produced as a powder then prepared as a ready-to-feed liquid for the administration to the infants). The two infant formulas, for the test group and the control group, once reconstituted, are described below in table 5.

**Table 5:**

| | First infant formula (corresponding to a composition A in the system according to the invention) | Second infant formula (corresponding to a composition B in the system according to the invention) |
|---|---|---|
| Energy (kcal/100 ml) | 64.6 | 67.2 |
| Protein (g/100 kcal) | 2.15 | 1.61 |
| Hydrolization | Intact protein | Intact protein |
| Whey:casein ratio | 60:40 | 60:40 |
| CHO (g/100 kcal) (*) | 11.13 | 11.1 |
| CHO (type) (*) | Lactose + syrup (corn syrup) | Lactose |
| Fat (g/100 kcal) | 5.21 | 5.46 |
| Fat (type) | Palm olein, soybean, coconut, safflower oils, sunflower oils | Palm olein, soybean, coconut, safflower oils |
| Linoleic/α-linolenic acid | 9.6 | 11.3 |
| LC-PUFAs (**) | DHA/ARA 1:2 (***) | DHA/ARA 1:2 (***) |

| | | |
|---|---|---|
| *CHO refers to carbohydrate **LC-PUFAs refers to long chain polyunsaturated fatty acids ***DHA refers to docosahexaenoic acid and ARA refers to arachidonic acid | | |

The first group of infants (test group) were fed with the first infant formula up to the age of 3 months as the sole nutrition. From the age of three months to six months the infant were fed with the second infant formula as their only nutrition, and subsequently they were fed with the second infant formula as part of a mixed diet during the introduction of solid foods to the infant until weaning is complete at about the age of 12 months.
The second group of infants (control group) were fed with the first infant formula from birth and up to the age of 12 months. From birth to the age of 6 months the infants were fed with the infant formula as the only nutrition and thereafter a as part of a mixed diet during the introduction of solid foods to the infant.

The mothers of the infants in this study came from a normal population and therefore contained women which had a normal distribution of weight. In table 6 below, the BMI are shown for the mothers of the infants in the study. The BMI is a measure for the weight of the women and the BMI of the mothers are before pregnancy.

**Table 6:**

| | Mothers to infants fed with formula | Mothers of infants breast fed |
|---|---|---|
| BMI<25 | 46% | 65% |
| BMI 25-30 | 23% | 25% |
| BMI >30 | 31% | 10% |

Thus, almost half of the women in the study had a normal weight and only 31% of the mothers of formula fed infants were obese.

The infants in the test group, the control group and a group of infants breast fed were evaluated at 6 months from birth and at 12 months from birth. Their body weight, length, head circumference, and abdominal skinfold were measured. Besides, a blood sample was taken and IGF-1 measured.

The study showed that when infants are fed with an infant formula system comprising:
- at least one nutritional composition (e.g. infant formula) A that is administered to the infants from birth and until 3 months of life,
- at least one nutritional composition (e.g. infant formula) B that is administered to the infants from 3 months and until 1 year of life,
wherein the nutritional compositions A and B were sequentially administered to the infants and wherein the amount of protein of the nutritional composition B (1.61 g/100 kcal) was lower than the amount of protein of the nutritional composition A (2.15 g/100 kcal), these infants have a lower weight gain from 3 to 6 months than infants fed with only the nutritional composition A (the first infant formula having a protein content of 2.15 g/100 kcal). For example, the difference in the weight gain between the test group and the control group was calculated to be -0.71 g/day, calculated as [average weight gain of test group per day from 3 to 6 months] minus [average weight gain of control group per day from 3 to 6 months]. This clearly shows that an infant fed with an infant formula system - that is part of the nutritional composition system according to the invention - as compared to only fed with the first infant formula having a protein content of 2.1 g/100 kcal will have a lower weight gain, almost 1 gram per day (-0.71) lower.
The results showed that the difference in the weight gain between the test group and the control group from 3 to 12 months were -231g (or -0.80 g/day).

In table 7 below, the differences in weight gain between the test group and the control group in relation to the BMI of the infant's mothers are shown. It was also very surprising to the inventors of the present invention to see this decrease in weight gain of infants in the test group compared to infants in the control group in relation to a decrease in BMI of the infant's mother.

**Table 7:**

| | From 3 to 6 months | From 3 to 12 months |
|---|---|---|
| Weight gain (g/day) | -0.71 | -0.80 |
| In total | | (-231g) |
| ΔTest group-control group | | |
| Weight gain (g/day) | -1.27 | -1.02 |
| BMI<25 | | |
| ΔTest group-control group | | |
| Weight gain (g/day) | -0.45 | -0.64 |
| BMI: > or = 25 | | |
| ΔTest group-control group | | |

The study also very surprisingly showed that the IGF-1 level in infants fed with the at least one nutritional composition A and the at least one nutritional composition B of the age tailored nutritional composition system according to the present invention was lower than the IGF-1 levels in infants fed with only the first infant formula, both when the infant was 6 months and 12 months. The IGF-1 level of infants in the study is shown below in table 8.

**Table 8:**

| | |
|---|---|
| IGF-1 at 6 months | -11.03% |
| Δ test group-control group | |
| IGF-1 at 12 months | -15.74% |
| Δ test group-control group | |
| IGF-1 at 6 months | 63.18% |
| Δ test group- group of breast fed infant | |
| IGF-1 at 12 months | 17.86% |
| Δ test group- group of breast fed infant | |
| IGF-1 at 6 months | -65.50% |
| Δ group of breast fed infant-control group | |
| IGF-1 at 12 months | -24.90% |
| Δ group of breast fed infant-control group | |

Thus, from the above table, it is evident that the IGF-1 level is lower in infants fed with the at least one nutritional composition A and at least one nutritional composition B (i.e. the first and the second infant formulas) of the age tailored nutritional composition system according to the present invention than in infant only fed with one nutritional composition A (i.e. the first infant formula) both when the infant is 6 months and 12 months. Further, Table 8 shows that the IGF-1 level in infants fed with the at least one nutritional composition A and at least one nutritional composition B, both being a part of the age tailored nutritional composition system according to the present invention, is closer to that of breast fed infants than the IGF-1 level in infant fed only with the first infant formula. Thus, the hormonal profile of an infant fed with the at least 2 infant formulas of the age tailored nutritional composition system is closer to that of breast fed infant than for infant fed only with the first infant formula.

### Example 6

Healthy, term infants of overweight mothers (prepregnancy BMI >25) were followed from birth.
Infants were fed from birth up to 3 months with a first infant formula having a protein content of 1.8g/100kcal.
After 3 months the infants fed formula participated in a double-blind, randomized trial and were assigned to either an experimental formula (EXPL) with protein 1.65g/100kcal, energy 628kcal/L and supplemented with *B. lactis and L. rhamnosus* (n=98); or a standard formula (CTRL) with protein 2.63g/100kcal and energy 656 kcal/L (n=101). Formulas were fed from 3 to 12 months.
Infants exclusively breastfed at 3 months (BF; n=76) were studied as reference group. Primary outcome was weight gain from 3 to 6 months; secondary outcomes were weight, length gain, BMI z-scores (until 24-mo) and serum IGF-1 levels. Data analysis was by intention-to-treat (ITT) or per protocol (PP).
Between 3 and 6 months, EXPL group had significantly slower weight gain than CTRL group: -1.71g/day (p=0.035) (ITT) and -1.99g/day (p=0.022) (PP). Weight gain of EXPL infants was similar to that of BF infants. Between 3 and 24 months, EXPL gained 517g less weight (p=0.04) (ITT) than CTRL. Weight gain of EXPL until 24 months was similar to BF. No differences in length gain until 24 months were observed. Weight-for-age z-scores between 3-24 months were lower in EXPL than in CTRL: -0.40 (p=0.036). At 6 months, IGF-1 levels were significantly lower in EXPL compared to CTRL (p=0.021) but similar to BF (p=0.489).

The tested infant formula system represents another example of a part of the age tailored nutritional composition system according to the present invention, especially the part provided to the infants before the first year of age.
This study demonstrates that when infants are fed with an infant formula system comprising:
- at least one nutritional composition A (e.g. an infant formula) that is administered to the infants from birth and until 3 months of life,
- at least one nutritional composition B (e.g. an infant formula) that is administered to the infants from 3 months and until 1 year of life,
wherein the nutritional compositions A and B were sequentially administered to the infants and wherein the amount of protein of the nutritional composition B (1.65 g/100 kcal) was lower than the amount of protein of the nutritional composition A (1.80 g/100 kcal),
this results in slower weight gain and lower weight-for-age z-scores until 24 months than when providing an infant formula system wherein the amount of protein of the nutritional composition B (2.63 g/100 kcal) is higher than the amount of protein of the nutritional composition A (1.80 g/100 kcal).

### Example 7

This example demonstrates the effect on the body composition of administering an infant formula comprising a high protein content as the sole source of nutrition but during a short period of time of the neonatal period, for example to a group of infants during the first 14 days of their life.
A randomized, controlled, double-blinded study of three groups in parallel (two experimental groups, each of them fed a different infant formula as described in more details below and a third group of wholly breast-fed infants as a reference) and was carried out at the Reanimation Néonatale et Néonatologie, Hôpital de la Croix Rousse, Lyon, France in accordance with the principles established in the 1964 Declaration of Helsinki (as amended) and with the approval of the CCPPRB Lyon A. Only healthy newborn infants with healthy mothers having a normal BMI before pregnancy and not having diabetes were considered for inclusion. Infants meeting these criteria whose mothers had decided not to breast feed at all were randomly assigned to one of the two experimental groups. Infants whose mothers had decided to breast feed exclusively for the first three months of the life of their infant were assigned to the reference group.

Of the experimental groups, one was fed the formula comprising 2.7g protein/100kcal (F2.7 group) and the other was fed a formula with 1.83g protein/100 kcal (F1.8 group). Detailed compositions of the formulas are given in the table below.

**Table 9:**

| Nutrient | F2.7 per 100kcal | F1.8 per 100kcal |
|---|---|---|
| Energy (kcal) | 100 | 100 |
| Protein (g) | 2.70 | 1.83 |
| Fat (g) | 5.3 | 5.34 |
| Linoleic acid (g) | 0.76 | 0.77 |
| α-Linolenic acid (mg) | 95 | 95 |
| Lactose (g) | 10.38 | 11.16 |
| Minerals (g) | 0.45 | 0.37 |
| Na (mg) | 26 | 23 |
| K (mg) | 89 | 89 |
| Cl (mg) | 64 | 64 |
| Ca (mg) | 80 | 80 |
| P (mg) | 40 | 40 |
| Mg (mg) | 7 | 6.9 |
| Mn (µg) | 8 | 8 |
| Se (µg) | 2 | 2 |
| Vitamin A (µg RE) | 105 | 105 |
| Vitamin D (µg) | 1.5 | 1.5 |
| Vitamin E (mg TE) | 0.8 | 0.8 |
| Vitamin K1 (µg) | 8 | 8 |
| Vitamin C (mg) | 10 | 10 |
| Vitamin B1 (mg) | 0.07 | 0.07 |
| Vitamin B2 (mg) | 0.15 | 0.15 |
| Niacin (mg) | 1 | 1 |
| Vitamin B6 (mg) | 0.075 | 0.075 |
| Folic acid (µg) | 9 | 9 |
| Pantothenic acid (mg) | 0.45 | 0.45 |
| Vitamin B12 (µg) | 0.3 | 0.3 |
| Biotin (µg) | 2.2 | 2.2 |
| Choline (mg) | 10 | 10 |
| Fe (mg) | 1.2 | 1.2 |
| I (µg) | 15 | 15 |
| Cu (mg) | 0.06 | 0.06 |
| Zn (mg) | 0.75 | 0.75 |

The two formulas were isocaloric having an energy density of 670 kcal/litre.
In both cases, the whey:casein ratio was 70:30. However other experiments suggest that at least similar results could be obtained with a higher whey:casein ratio (e.g. from 90:10 to 100:0).
The formulas were supplied packed in metal cans with their identity marked by a letter coding known only to the investigating staff. The duration of the study was 12 months.

238 infants (125 boys and 113 girls) were recruited, 74 to the F1.8 group, 80 to the F2.7 group and 84 to the reference group. The infants were fed their assigned formula or breast milk *ad libitum* as the sole source of nutrition.

Growth parameters and body composition were determined at the age of 2 weeks ± 2 days. Body composition (BC) measurements were used to assess fat mass (FM) gain during the first year of age using PEA-POD methodology. PEA-POD is designed to measure the BC of babies from birth to 6 months using principles similar to hydrostatic weighing (underwater weighing). Instead of using water to measure body volume, PEA-POD uses air displacement plethysmography as a densitometric technique in which body fat is assessed from direct measurement of subject mass volume to measure body volume.

The calorie intake did not differ between the formula groups and growth parameters including gain of body weight, head circumference and length were identical between the 3 groups. As shown in Figure 1, at 2 weeks of age, the accumulated fat mass was not different between the formula-fed groups but was significantly higher in the F1.8 group compared to the reference group (fat mass: 13.2 ± 3.4 vs 11.8 ± 3.5%, p<0.01). The F2.7 group showed no significant difference of fat mass (12.7 ± 3.4%) when compared to the reference group (see figure 1).

These results show that providing a nutritional composition comprising a high protein intake during the first 2 weeks of life does not impact growth parameters. However, a low protein intake administered during this period of the infant's life leads to an increased adiposity when compared to breastfeeding.

Therefore providing a composition comprising at least 2.4 g of protein per 100kcal (e.g. 2.7 g/100kcal) during at least a part of the neonatal period (e.g. the first 14 days of life) could reduce the accumulation of fat mass.
It is therefore particularly advantageous that the age-tailored nutritional composition system according to the invention comprises at least two nutritional compositions A (for example two nutritional compositions A1 and A2, or three nutritional compositions A1, A2 and A3...) to be administered to an infant during the first three months of life of said infant. It is especially advantageous that the age-tailored nutritional composition system according to the invention comprises at least one nutritional composition A1 with protein in an amount of 2.4-3.0g/100 kcal (e.g. 2.7 g/100kcal) and that is administered to the infant from birth and until the first 3 to 15 days (e.g. the first 14 days).

### Example 8

Female virgin Sprague-Dawley rats of 10-11 weeks old with close body weights (about 250±30 g) and synchronized cycle were single couple, during their estrus cycle. The coupling exposure was limited to only 24 hr. After birth, the number of pups in each litter was limited to 8, with preference to male pups, in order to have closer body weight between pups. The pups suckled from their mother until age of 16 days. Then, one hundred twenty male pups were separated from dams and randomly divided into four groups (25 or 35 animals per group). All groups had with similar means and standard deviation of body weights and same number of pup from each litter was allocated in each group. Animals were caged individually in a room at 25°C, with 55% relative humidity and a 12 hour light/dark cycle during the study. The groups were pair-fed during the weaning period, on an iso-energetic basis, for a period of three weeks, with one of the 4 tested diets (see details of the different nutritional compositions in table 10): three of these diets have a low protein content (LF-HC group, MF-MC group and HF-LC group) and one of them has a higher protein content (HP-LF group). The protein/fat/CHO energy participation was respectively of 20/10/70 (LF-HC group, n=35), 20/30/50 (MF-MC group, n=25), 20/60/20 (HF-LC group, n=35) and 40/10/50 (HP-LF group, n=25).

**Table 10:**

| Diet | LF-HC | MF-MC | HF-LC | HP-LF |
|---|---|---|---|---|
| | g/345 Kcal | g/345 Kcal | g/345 Kcal | g/345 Kcal |
| Casein | 20 | 20 | 20 | 40 |
| L- Cystine | 0.3 | 0.3 | 0.3 | 0.3 |
| Lactose.H2O | 5 | 5 | 5 | 5 |
| Sucrose | 10 | 10 | 10 | 10 |
| Corn flour | 51.15 | 31.62 | 2.43 | 31.15 |
| Vit. Mix AIN93 * | 1 | 1 | 1 | 1 |
| Min. Mix AIN93 G * | 3.5 | 3.5 | 3.5 | 3.5 |
| Bitartr. Choline | 0.25 | 0.25 | 0.25 | 0.25 |
| Tert-butylhydroquinone | 0.0014 | 0.0014 | 0.0014 | 0.0014 |
| Cellulose | 5 | 5 | 5 | 5 |
| Soya oil | 1.90 | 5.741 | 11.482 | 1.90 |
| Corn oil | 1.90 | 5.741 | 11.482 | 1.90 |
| Total | 100 | 88 | 70 | 100 |
| kcal /100 g powder diet | 345 | 391 | 490 | 345 |
| % dry Wt of powder | 93 | 94.71 | 97.69 | 94.21 |
| % dry wt final pellet (analysis) | 90 | 89 | 92 | 96 |
| Kcal/100 g final wet diet (pell) | 335 | 368 | 460 | 350 |

| % Energy | | | | |
|---|---|---|---|---|
| Protein | 20 | 20 | 20 | 40 |
| CHO | 70 | 50 | 20 | 50 |
| Fat | 10 | 30 | 60 | 10 |

| | | | | |
|---|---|---|---|---|
| * Provider: Socochim | | | | |

25 animals per each group (randomly selected in the 2 groups comprising 35 pups) were fed ad-libitum with a laboratory chow diet with 13% fat E (Kliba 3434) for 10 weeks (age of 5 to 15 weeks) during the post-weaning period, followed by challenge with a high-fat obesogenic diet (Kliba 2126 with 45% fat E) for 31 weeks (age: 15 to 46 weeks). The animals were killed by decapitation at 46 weeks.

Body weight of the pups was initially recorded then it was measured especially at 23 days and 174 days.
Body composition was measured by nuclear magnetic resonance (NMR), using EchoMRI TM 2004 (Echo medical systems, Houston, USA).

Blood collected in EDTA tubes after decapitation of animals at the end of study (46 weeks) was analysed. Plasma IGF-1 was measured by ELISA method using appropriate kits from Immunodiagnostic system Inc. (Fountain Hills, AZ, USA).

Results of the analysis are detailed in table 11.

**Table 11:**

| | LF-HC | MF-MC | HF-LC | HP-LF |
|---|---|---|---|---|
| Body fat mass (g) at 23 days | 7.3±0.4 | 8±0.3 | 7.6±0.3 | 7.5±0.3 |
| Body fat mass (g) at 174 days | 133.5±9.8 | 146.4±10.1 | 156.3±10.7 | 160.3±9.6 |
| % Body fat mass (g/100g body weight) at 174 days | 21.7±1.3 | 22.4±1.2 | 24.5±1.3 | 26.7±0.9 |
| Fat gain (g) during the post-weaning period D104-174 | 57.7±7 | 56.3±7.5 | 68.4±7.1 | 81.9±7.3 |
| Plasma IGF at 46 weeks (ng/ml) | 1428±51 | 1542±25 | 1535±36 | 1661±35 |

It was observed that the high protein weaning diet group (HP-LF) gained more total fat relative to the other groups having a lower protein weaning diet (p=0.053 & p=0.02 relative to LF-HC and MF-MC groups respectively). Interestingly, at the age of 174 days so 137 days after the diet intervention, HP-LF group had significantly higher % body fat relative to LF-HC (19% higher, p=0.04) and MF-MC groups (16% higher, p<0.01).
The fat/lean ratio (index of obesity) of HP-LF group was 22.8% higher than both of MF-MC (p=0.023) and HF-HC groups.
The plasma IGF at the end of study (age 46 weeks) was also significantly higher in the group previously fed with the high protein weaning diet (HP-LF) relative to both of LF-HC (14% higher, p=0.008) and MF-MC fed (8% higher, P=0.02) groups.

These results show that an increase in the protein content of weaning diet from 20%E (HF-LC & MFMC groups) to 40%E (HP-LF group), during the weaning period only, significantly increases the percentage of body fat by about 16-19% (p<0.05 vs. LF-HC & MF-MC groups) and consequently increases the fat/lean mass ratio by about 23% during adulthood at age of 175 days (p=0.023 vs. MF-MC group).
This effect was observed when extra protein was provided in the iso-energy exchange for either carbohydrate (LF-HC group) or fat content of weaning diet (MF-MC group) and hence indicate that the observed long term body composition effect is due to an increase in the protein intake during the weaning period rather than reduction in the carbohydrate or fat intake during weaning period.

Since the experiments were made in rats during the weaning period (that would correspond approximately to the period after 1 year of age in human), this example demonstrates the advantages that could be obtained (especially for the prevention of the risk of obesity) at long term, when feeding young children after 1 year of life with a nutritional composition (e.g. a growing-up milk) comprising a low protein content.

### Example 9

Programmed mated Sprague-dawley rats (SD, n=38) of 10-11 weeks old were purchased from Charles River (France). Female virgin SD rats with close body weight of 250 ± 30 g, were single coupled during their estrus cycle with male SD rats, characterized by a homogenized body weight and age (371 ± 11g, 9-11 weeks old). The coupling exposure was limited to only 20 hours. Thirty eight animals with expelled vaginal plugs were selected and send to the Nestle Research Center on post mating day of 3. Upon arrival, the female rats were caged individually and feed ad-libitum with a laboratory chow diet (kliba 3437) until birth.

At birth, only dams and their pups bearing at least 8 pups with minimum 3-4 males per litter, were included in the study. The number of pups in each litter was limited to 8, with preference to male pups. All dams were fed ad-libitum with a rat chow diet (Kliba 3437) during the lactation period.
The pups remained with their mother until age of 16 days (2 days after eye opening). During this period, they were allowed to suckle ad-libitum from dams.

During the weaning period, pups were separated from dams and the same number of male pups from each litter (sibling) were randomly allocated into one of the following study groups:
a) Casein 36% group (Casein group)
b) Whey 36% group (Whey group)
Pups were fed with one of the following experimental diet different in type of protein (casein or whey) from 16 days until 45 days of age. The diets were isonitrogenous at same level of protein and isoenergetic in all groups. The composition of the experimental diet is shown in table 12:

**Table 12:**

| Products | Casein diet | Whey diet |
|---|---|---|
| Corn starch | 37 | 37 |
| Casein | 36 | |
| Whey | | 36.3 |
| Sucrose | 10 | 10 |
| Soybean oil | 7 | 7 |
| Cellulose | 5 | 5 |
| Min. Mix AIN93 G * | 3.5 | 3.5 |
| Vit. Mix AIN93 * | 1.0 | 1.0 |
| L-Cystine | 0.3 | |
| Bitartr. choline | 0.25 | 0.25 |
| Tert-butylhyd roquinone | 0.014 | 0.014 |
| Total (wet weight) | 100 | 100 |
| kcal /100 g diet (calculated on the analysed humidity basis) | 368.2 | 368.2 |
| % Dry wt of powder (based on ingredient humidity basis) | 94.1 | 94.0 |
| % dry wt final pellet (analysis) | 88.5 | 88.4 |
| Kcal /100 g powder (final pellet) | 346.28 | 346.26 |

| % Energy | | |
|---|---|---|
| Protein (basis on nunspeed nitrogen results *6.38) | 35.3 | 36.0 |
| Protein (from ingredient based on humidity results) | 37.6 | 37.6 |
| CHO | 45.3 | 45.3 |
| Fat | 17.1 | 17.1 |
| % Total energy (protein from nunsped results) | 97.7 | 98.4 |
| % Total energy (protein from ingredient based on humidity results) | 100.0 | 100.0 |

| | | |
|---|---|---|
| Whey: prolacta 90 (lactalis) Casein: from animalhouse (protein = dry weight) * Provider: Socochim | | |

During the post weaning period, all groups received the same diet. First they were all fed with a commercial chow diet with low fat content (Kilba 3437,13 % fat energy) until day 255 and then all groups were challenged with a commercial high fat diet (Kliba 2126, 45% fat energy) until the end of the study (308-311 days of age). The remaining animals were euthanized at days 308-311.

Animals of the same group were first caged collectively (5 per cage) for few days (D16 to D20-21) and then separated and caged individually until the end of the study. They were kept in the same room at 23±3 °C with 55% relative humidity and a 12 hour light/dark cycle during the study.
Body weight of the pups was initially recorded. It was measured once per week from 46 days until the end of the study.
Body composition was measured by nuclear magnetic resonance (NMR).
Results of the analysis are detailed in table 13.

**Table 13:**

| | Casein group | Whey group |
|---|---|---|
| Fat gain (g) median between 46-225 days | 90±5 | 99±8 |
| Fat gain (g) median between 226-311 days | 71±5 | 85±6 |
| Fat gain (g) median between 46-311 days | 166±7 | 191±11 |
| Fat/lean ratio median between 46-311 days | 0.27±0.01 | 0.32±0.02 |

It was observed that the fat gains as well as the fat/lean ratios were lower in the casein group than in the whey group after 46 days and up to 311 days.

These results shows the effect of the quality of protein (Casein vs Whey) and especially the advantages at medium and long term of providing during the weaning period in rats a nutritional composition based on casein rather on whey.
Since the experiments were made in rats during the weaning period (that would correspond approximately to the period after 1 year of age in human), this example demonstrates the interest of feeding young children after 1 year of life with a nutritional composition (e.g. a growing-up milk) comprising a lower whey:casein ratio and the advantages that could be expected (especially for the prevention of the risk of obesity) at medium and long terms.
Other experiments showing the interest of providing casein vs whey are described in WO2010112430.

## Claims

1. Age-tailored nutritional composition system comprising:
- at least one nutritional composition A that is administered to an infant from birth and until 3-6 months of life of said infant,
- at least one nutritional composition B that is administered to an infant from 3-6 months and until 1 year of life of said infant,
- at least one nutritional composition C that is administered after the first year of life of the young child,
wherein the nutritional compositions A, B and C are sequentially administered to the infant/young child;
wherein said nutritional compositions A and B comprise an amount of protein between 1.5 and 3.0 g/100kcal;
wherein the amount of protein of the nutritional composition(s) B is lower than the amount of protein of the nutritional composition(s) A;
and wherein the amount of protein of the nutritional composition C is at least 1.3 g/100kcal but is lower than the amount of protein of the nutritional compositions A and B,
wherein the amount of protein of the at least one nutritional composition C is comprised between 1.3 and 1.5 g/100kcal,
for use in an infant or young child to reduce the risk of developing obesity later in said infant's or young child's life or to reduce the IGF-1 level.

2. The age-tailored nutritional composition for use according to claim 1 wherein the at least one nutritional composition A is administered to an infant from birth and until 3 months of life of said infant, and the at least one nutritional composition B is administered to an infant from 3 months and until 1 year of life of said infant.

3. The age-tailored nutritional composition for use according to anyone of the preceding claims, wherein the at least one nutritional composition C is administered from 1 to 3 years or from 1 to 2 years of life of a young child.

4. The age-tailored nutritional composition for use according to anyone of the preceding claims comprising:
- at least one nutritional composition A with protein in an amount of 1.75- 3.0g/100 kcal,
- at least one nutritional composition B with protein in an amount of 1.5-1.75g/100 kcal.

5. The age-tailored nutritional composition for use according to anyone of the preceding claims wherein the whey: casein ratio of the nutritional compositions decreases with the sequence of administration.

6. The age-tailored nutritional composition for use according to anyone of the preceding claims wherein the whey:casein ratio of the nutritional composition(s) A is from 70: 30 to 100: 0, the whey: casein ratio of the nutritional composition(s) B is from 50:50 to 70:30, and/or the whey:casein ratio of the nutritional composition C is from 23:77 to 50:50.

7. The age-tailored nutritional composition for use according to anyone of the preceding claims comprising two or more nutritional compositions A that are sequentially administered to an infant before the administration of the nutritional composition(s) B and that comprise an amount of protein that decreases with the sequence of administration.

8. The age-tailored nutritional composition for use according to anyone of the preceding claims comprising:
- one nutritional composition A1 with protein in an amount of 2.4-3.0g/100 kcal,
- one nutritional composition A2 with protein in an amount of 1.75-2.4g/100 kcal.

9. The age-tailored nutritional composition for use according the claim 8 wherein:
- the whey: casein ratio of A1 is from 90: 10 to 100: 0,
- the whey: casein ratio of A2 is from 70: 30 to 90: 10.

10. The age-tailored nutritional composition for use according to claim 8 or 9, wherein:
- the nutritional composition A1 is administered to the infant from birth and until the first 3 to 15 days,
- the nutritional composition A2 is administered from the first 3 to 15 days and until 3 months of life of the infant.

11. The age-tailored nutritional composition for use according to anyone of the claims 1 to 7 comprising:
- one nutritional composition A1 with protein in an amount of 2.4-3.0g/100 kcal,
- one nutritional composition A2 with protein in an amount of 1.9-2.4g/100 kcal,
- one nutritional composition A3 with protein in an amount of 1.75-1.9g/100 kcal.

12. The age-tailored nutritional composition for use according the claim 11 wherein:
- the whey: casein ratio of A1 is from 90: 10 to 100: 0,
- the whey: casein ratio of A2 is from 70: 30 to 90: 10,
- the whey: casein ratio of A3 is 70: 30.

13. The age-tailored nutritional composition for use according to claim 11 or 12, wherein:
- the nutritional composition A1 is administered to the infant from birth and until the first 3 to 15 days,
- the nutritional composition A2 is administered after the first 3 to 15 days and until 1 month of life of the infant,
- the nutritional composition A3 is administered from 1 month and until 3 months of life of the infant.

14. The age-tailored nutritional composition for use according to anyone of the preceding claims wherein the at least two nutritional compositions A and B are infant formulas and the at least one nutritional composition C is a growing-up milk.

15. The age-tailored nutritional composition for use according to any of the preceding claims, wherein the nutritional compositions further comprise carbohydrate and/or lipid.

16. The age-tailored nutritional composition for use according to anyone of the claims, wherein the nutritional compositions are packaged in separated units, each unit containing sufficient amount in concentrated form to prepare a single serving upon reconstitution with an appropriate amount of water.

17. Nutritional composition comprising an amount of protein between 1.3 and 1.5g/100 kcal for use in a young child after its first year of life to reduce the risk of developing obesity later in said young child's life or to reduce the IGF-1 level.

## Patentansprüche

1. Altersgerechtes Nährstoffzusammensetzungssystem, umfassend:
- mindestens eine Nährstoffzusammensetzung A, die einem Säugling ab Geburt und bis 3 bis 6 Lebensmonate des Säuglings verabreicht wird,
- mindestens eine Nährstoffzusammensetzung B, die einem Säugling von 3 bis 6 Lebensmonaten und bis 1 Lebensjahr des Säuglings verabreicht wird,
- mindestens eine Nährstoffzusammensetzung C, die nach dem ersten Lebensjahr des Kleinkindes verabreicht wird,
wobei die Nährstoffzusammensetzungen A, B und C dem Säugling/Kleinkind nacheinander verabreicht werden;
wobei die Nährstoffzusammensetzungen A und B eine Proteinmenge zwischen 1,5 und 3,0 g/100 kcal umfassen;
wobei die Proteinmenge der Nährstoffzusammensetzung(en) B niedriger ist als die Proteinmenge der Nährstoffzusammensetzung(en) A;
und wobei die Proteinmenge der Nährstoffzusammensetzung C mindestens 1,3 g/100 kcal beträgt, aber geringer ist als die Proteinmenge der Nährstoffzusammensetzungen A und B,
wobei die Proteinmenge der mindestens einen Nährstoffzusammensetzung C zwischen 1,3 und 1,5 g/100 kcal umfasst ist,
zur Verwendung bei einem Säugling oder Kleinkind, um das Risiko der Entwicklung von Adipositas im späteren Leben des Säuglings oder des Kleinkindes zu verringern, oder um den IGF 1-Spiegel zu verringern.

2. Altersgerechte Nährstoffzusammensetzung zur Verwendung nach Anspruch 1, wobei die mindestens eine Nährstoffzusammensetzung A einem Säugling ab Geburt und bis 3 Lebensmonate des Säuglings verabreicht wird, und die mindestens eine Nährstoffzusammensetzung B einem Säugling ab 3 Lebensmonaten und bis 1 Lebensjahr des Säuglings verabreicht wird.

3. Altersgerechte Nährstoffzusammensetzung zur Verwendung nach einem der vorstehenden Ansprüche, wobei die mindestens eine Nährstoffzusammensetzung C von 1 bis 3 Lebensjahren oder von 1 bis 2 Lebensjahren eines Kleinkindes verabreicht wird.

4. Altersgerechte Nährstoffzusammensetzung zur Verwendung nach einem der vorstehenden Ansprüche, umfassend:
- mindestens eine Nährstoffzusammensetzung A mit Protein in einer Menge von 1,75-3,0 g/100 kcal,
- mindestens eine Nährstoffzusammensetzung B mit Protein in einer Menge von 1,5-1,75 g/100 kcal.

5. Altersgerechte Nährstoffzusammensetzung zur Verwendung nach einem der vorstehenden Ansprüche, wobei das Molke:Casein-Verhältnis der Nährstoffzusammensetzungen mit der Verabreichungsreihenfolge abnimmt.

6. Altersgerechte Nährstoffzusammensetzung zur Verwendung nach einem der vorstehenden Ansprüche, wobei das Molke:Casein-Verhältnis der Nährstoffzusammensetzung(en) A von 70:30 bis 100:0 beträgt, wobei das Molke:Casein-Verhältnis der Nährstoffzusammensetzung(en) B von 50:50 bis 70:30 beträgt und/oder das Molke:Casein-Verhältnis der Ernährungszusammensetzung C von 23:77 bis 50:50 beträgt.

7. Altersgerechte Nährstoffzusammensetzung zur Verwendung nach einem der vorstehenden Ansprüche, umfassend zwei oder mehrere Nährstoffzusammensetzungen A, die einem Säugling nacheinander vor der Verabreichung der Nährstoffzusammensetzung B bzw. der Nährstoffzusammensetzungen B verabreicht werden, und die eine Proteinmenge umfassen, die mit der Verabreichungsreihenfolge abnimmt.

8. Altersgerechte Nährstoffzusammensetzung zur Verwendung nach einem der vorstehenden Ansprüche, umfassend:
- eine Nährstoffzusammensetzung A1 mit Protein in einer Menge von 2,4-3,0 g/100 kcal,
- eine Nährstoffzusammensetzung A2 mit Protein in einer Menge von 1,75-2,4 g/100 kcal.

9. Altersgerechte Nährstoffzusammensetzung zur Verwendung nach Anspruch 8, wobei:
- das Molke:Casein-Verhältnis von A1 von 90:10 bis 100:0 beträgt,
- das Molke:Casein-Verhältnis von A2 von 70:30 bis 90:10 beträgt.

10. Altersgerechte Nährstoffzusammensetzung zur Verwendung nach Anspruch 8 oder 9, wobei:
- die Nährstoffzusammensetzung A1 dem Säugling ab der Geburt und bis in den ersten 3 bis 15 Tagen verabreicht wird,
- die Nährstoffzusammensetzung A2 ab den ersten 3 bis 15 Tagen und bis 3 Lebensmonate des Säuglings verabreicht wird.

11. Altersgerechte Nährstoffzusammensetzung zur Verwendung nach einem der Ansprüche 1 bis 7, umfassend:
- eine Nährstoffzusammensetzung A1 mit Protein in einer Menge von 2,4-3,0 g/100 kcal,
- eine Nährstoffzusammensetzung A2 mit Protein in einer Menge von 1,9 - 2,4 g/100 kcal,
- eine Nährstoffzusammensetzung A3 mit Protein in einer Menge von 1,75-1,9 g/100 kcal.

12. Altersgerechte Nährstoffzusammensetzung zur Verwendung nach Anspruch 11, wobei:
- das Molke:Casein-Verhältnis von A1 von 90:10 bis 100:0 beträgt,
- das Molke:Casein-Verhältnis von A2 von 70:30 bis 90:10 beträgt,
- das Molke:Casein-Verhältnis von A3 70:30 beträgt.

13. Altersgerechte Nährstoffzusammensetzung zur Verwendung nach Anspruch 11 oder 12, wobei:
- die Nährstoffzusammensetzung A1 dem Säugling ab der Geburt und bis in den ersten 3 bis 15 Tagen verabreicht wird,
- die Nährstoffzusammensetzung A2 nach den ersten 3 bis 15 Tagen und bis 1 Lebensmonat des Säuglings verabreicht wird,
- die Nährstoffzusammensetzung A3 von 1 Lebensmonat und bis 3 Lebensmonate des Säuglings verabreicht wird.

14. Altersgerechte Nährstoffzusammensetzung zur Verwendung nach einem der vorstehenden Ansprüche, wobei die mindestens zwei Nährstoffzusammensetzungen A und B Säuglingsformulierungen sind, und die mindestens eine Nährstoffzusammensetzung C eine Milch für Heranwachsende ist.

15. Altersgerechte Nährstoffzusammensetzung zur Verwendung nach einem der vorstehenden Ansprüche, wobei die Nährstoffzusammensetzungen ferner Kohlenhydrat und/oder Lipid umfassen.

16. Altersgerechte Nährstoffzusammensetzung zur Verwendung nach einem der vorstehenden Ansprüche, wobei die Nährstoffzusammensetzungen in getrennten Einheiten verpackt sind, wobei jede Einheit eine ausreichende Menge in konzentrierter Form zur Herstellung einer einzigen Portion nach Rekonstitution mit einer geeigneten Menge an Wasser enthält.

17. Nährstoffzusammensetzung, umfassend eine Proteinmenge zwischen 1,3 und 1,5 g/100 kcal zur Verwendung bei einem Kleinkind nach seinem ersten Lebensjahr, um das Risiko der Entwicklung von Adipositas im späteren Leben des Kleinkindes zu verringern, oder um den IGF 1-Spiegel zu verringern.

## Revendications

1. Système de compositions nutritionnelles adaptées à l'âge comprenant :
- au moins une composition nutritionnelle A qui est administrée à un nourrisson à partir de la naissance et jusqu'à 3 à 6 mois de la vie dudit nourrisson,
- au moins une composition nutritionnelle B qui est administrée à un nourrisson à partir de 3 à 6 mois et jusqu'à 1 an de la vie dudit nourrisson,
- au moins une composition nutritionnelle C qui est administrée après la première année de la vie du jeune enfant,
dans lequel les compositions nutritionnelles A, B et C sont administrées séquentiellement au nourrisson/jeune enfant ;
dans lequel lesdites compositions nutritionnelles A et B comprennent une quantité de protéine comprise entre 1,5 et 3,0 g/100 kcal ;
dans lequel la quantité de protéine de la ou des composition(s) nutritionnelle(s) B est inférieure à la quantité de protéine de la ou des composition(s) nutritionnelle(s) A ;
et dans lequel la quantité de protéine de la composition nutritionnelle C vaut au moins 1,3 g/100 kcal mais est inférieure à la quantité de protéine des compositions nutritionnelles A et B,
dans lequel la quantité de protéine de l'au moins une composition nutritionnelle C est comprise entre 1,3 et 1,5 g/100 kcal,
pour utilisation chez un nourrisson ou jeune enfant pour réduire le risque de développement d'obésité plus tard dans la vie dudit nourrisson ou jeune enfant ou pour réduire le taux d'IGF-1.

2. Composition nutritionnelle adaptée à l'âge pour utilisation selon la revendication 1 dans laquelle l'au moins une composition nutritionnelle A est administrée à un nourrisson à partir de la naissance et jusqu'à 3 mois de la vie dudit nourrisson, et l'au moins une composition nutritionnelle B est administrée à un nourrisson à partir de 3 mois et jusqu'à 1 an de la vie dudit nourrisson.

3. Composition nutritionnelle adaptée à l'âge pour utilisation selon l'une quelconque des revendications précédentes, dans laquelle l'au moins une composition nutritionnelle C est administrée à partir de 1 à 3 ans ou à partir de 1 à 2 ans de la vie d'un jeune enfant.

4. Composition nutritionnelle adaptée à l'âge pour utilisation selon l'une quelconque des revendications précédentes comprenant :
- au moins une composition nutritionnelle A avec de la protéine en une quantité de 1,75 à 3,0 g/100 kcal,
- au moins une composition nutritionnelle B avec de la protéine en une quantité de 1,5 à 1,75 g/100 kcal.

5. Composition nutritionnelle adaptée à l'âge pour utilisation selon l'une quelconque des revendications précédentes dans laquelle le rapport lactosérum:caséine des compositions nutritionnelles diminue avec la séquence d'administration.

6. Composition nutritionnelle adaptée à l'âge pour utilisation selon l'une quelconque des revendications précédentes dans laquelle le rapport lactosérum:caséine de la ou des composition(s) nutritionnelle(s) A va de 70:30 à 100:0, le rapport lactosérum:caséine de la ou des composition(s) nutritionnelle(s) B va de 50:50 à 70:30, et/ou le rapport lactosérum:caséine de la composition nutritionnelle C va de 23:77 à 50:50.

7. Composition nutritionnelle adaptée à l'âge pour utilisation selon l'une quelconque des revendications précédentes comprenant deux compositions nutritionnelles A ou plus qui sont séquentiellement administrées à un nourrisson avant l'administration de la ou des composition(s) nutritionnelle(s) B et qui comprennent une quantité de protéine qui diminue avec la séquence d'administration.

8. Composition nutritionnelle adaptée à l'âge pour utilisation selon l'une quelconque des revendications précédentes comprenant :
- une composition nutritionnelle A1 avec de la protéine en une quantité de 2,4 à 3,0 g/100 kcal,
- une composition nutritionnelle A2 avec de la protéine en une quantité de 1,75 à 2,4 g/100 kcal.

9. Composition nutritionnelle adaptée à l'âge pour utilisation selon la revendication 8 dans laquelle :
- le rapport lactosérum:caséine de A1 va de 90:10 à 100:0,
- le rapport lactosérum:caséine de A2 va de 70:30 à 90:10.

10. Composition nutritionnelle adaptée à l'âge pour utilisation selon la revendication 8 ou 9, dans laquelle : - la composition nutritionnelle A1 est administrée au nourrisson à partir de la naissance et jusqu'aux 3 à 15 premiers jours,
- la composition nutritionnelle A2 est administrée à partir des 3 à 15 premiers jours et jusqu'à 3 mois de la vie du nourrisson.

11. Composition nutritionnelle adaptée à l'âge pour utilisation selon l'une quelconque des revendications 1 à 7 comprenant :
- une composition nutritionnelle A1 avec de la protéine en une quantité de 2,4 à 3,0 g/100 kcal,
- une composition nutritionnelle A2 avec de la protéine en une quantité de 1,9 à 2,4 g/100 kcal,
- une composition nutritionnelle A3 avec de la protéine en une quantité de 1,75 à 1,9 g/100 kcal.

12. Composition nutritionnelle adaptée à l'âge pour utilisation selon la revendication 11 dans laquelle :
- le rapport lactosérum:caséine de A1 va de 90:10 à 100:0,
- le rapport lactosérum:caséine de A2 va de 70:30 à 90:10,
- le rapport lactosérum:caséine de A3 est de 70:30.

13. Composition nutritionnelle adaptée à l'âge pour utilisation selon la revendication 11 ou 12, dans laquelle :
- la composition nutritionnelle A1 est administrée au nourrisson à partir de la naissance et jusqu'aux 3 à 15 premiers jours,
- la composition nutritionnelle A2 est administrée après les 3 à 15 premiers jours et jusqu'à 1 mois de la vie du nourrisson,
- la composition nutritionnelle A3 est administrée à partir de 1 mois et jusqu'à 3 mois de la vie du nourrisson.

14. Composition nutritionnelle adaptée à l'âge pour utilisation selon l'une quelconque des revendications précédentes dans laquelle les au moins deux compositions nutritionnelles A et B sont des préparations pour nourrissons et l'au moins une composition nutritionnelle C est un lait de croissance.

15. Composition nutritionnelle adaptée à l'âge pour utilisation selon l'une quelconque des revendications précédentes, dans laquelle les compositions nutritionnelles comprennent en outre un glucide et/ou un lipide.

16. Composition nutritionnelle adaptée à l'âge pour utilisation selon l'une quelconque des revendications, dans laquelle les compositions nutritionnelles sont emballées dans des unités indépendantes, chaque unité contenant une quantité suffisante sous forme concentrée pour préparer une portion unique après reconstitution avec une quantité appropriée d'eau.

17. Composition nutritionnelle comprenant une quantité de protéine entre 1,3 et 1,5 g/100 kcal pour utilisation chez un jeune enfant après sa première année de vie pour réduire le risque de développement d'obésité plus tard dans la vie du jeune enfant ou pour réduire le taux d'IGF-1.
